(19) Europäisches Patentamt / European Patent Office / Office européen des brevets

(11) **EP 3 705 388 A1**

(12) **EUROPEAN PATENT APPLICATION**
published in accordance with Art. 153(4) EPC

(43) Date of publication:
**09.09.2020 Bulletin 2020/37**

(21) Application number: **18872121.1**

(22) Date of filing: **30.10.2018**

(51) Int Cl.:
**B62K 5/10** *(2013.01)* **B60G 21/05** *(2006.01)*
**B60L 15/20** *(2006.01)* **B62D 6/00** *(2006.01)*
**B62D 9/02** *(2006.01)* **B62D 61/08** *(2006.01)*
**B62K 5/027** *(2013.01)*

(86) International application number:
**PCT/JP2018/040293**

(87) International publication number:
**WO 2019/088085 (09.05.2019 Gazette 2019/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.10.2017 JP 2017210285**

(71) Applicant: **Equos Research Co., Ltd.**
**Tokyo 101-0021 (JP)**

(72) Inventors:
• **ARAKI Keizo**
**Tokyo 101-0021 (JP)**
• **MIZUNO Akira**
**Tokyo 101-0021 (JP)**
• **MOGI Koji**
**Tokyo 101-0021 (JP)**

(74) Representative: **TBK**
**Bavariaring 4-6**
**80336 München (DE)**

(54) **VEHICLE**

(57)     A vehicle includes: a vehicle body; a lean mechanism that leans the vehicle body; an operation input unit; a lean control unit; and a turn wheel support unit that supports one or more turn wheels turnable to right and left. The turn wheel support unit includes: a supporting member that supports the one or more turn wheels; a turning actuator that applies to the supporting member a torque for turning the supporting member to right and left; and a turn control unit that uses a control parameter to control the torque of the turning actuator. The turn control unit includes: an specifying module that uses the control parameter to specify a target direction of the one or more turn wheels; a first determination module that determines a first control value for causing a direction of the one or more turn wheels to approach the target direction; an actuation control value determination module that uses the first control value to determine an actuation control value; and a torque control module that controls a torque of the turning actuator according to the actuation control value. The first determination module uses the vehicle velocity to adjust the first control value.

Fig. 11

**Description**

Technical Field

This specification relates to a vehicle which turns by leaning its vehicle body.

Background Art

Vehicles which lean during turning have been proposed. For example, a technique was proposed where a front wheel moves freely in a caster fashion, and a vehicle body is leaned to a direction specified by a direction to which a driver moves a control device.

Prior Art Document

Patent Document

Patent Document 1 WO 2011/083335

Summary of the Invention

Problems to be Solved by the Invention

However, driving stability of such a vehicle may decrease. For example, the direction of its wheel turnable to right and left may become unstable.

This specification discloses the technique of improving driving stability of vehicles.

Means for Solving the Problems

For example, this specification discloses the following application examples.

[Application Example 1]

A vehicle including:

N (N is an integer equal to or larger than 3) wheels, including a pair of wheels spaced apart from each other in a width direction of the vehicle and one or more other wheels, at least one of another wheel or the pair of wheels being configured as one or more turn wheels turnable to right and left relative to a forward movement direction of the vehicle, and the N wheels including one or more front wheels and one or more rear wheels;
a vehicle body;
a lean mechanism for leaning the vehicle body in the width direction;
an operation input unit to be operated to input an operation amount indicating turning direction and degree of turn;
a lean control unit for controlling the lean mechanism using the operation amount input into the operation input unit; and
a turn wheel support unit supporting the one or more turn wheels,
wherein the turn wheel support unit includes:

a supporting member rotatably supporting the one or more turn wheels;
a turning device supporting the supporting member turnably to right and left relative to the vehicle body;
a turning actuator for applying to the supporting member a torque for turning the supporting member to right and left; and
a turn control unit for controlling a torque of the turning actuator using a control parameter, the control parameter including at least one of a lean parameter related to degree of lean of the vehicle body or the operation amount, and the vehicle velocity,

wherein the turn control unit includes:

an specifying module for specifying a target direction of the one or more turn wheels using the control parameter;
a first determination module for determining a first control value for causing a direction of the one or more turn wheels to approach the target direction;
an actuation control value determination module for determining an actuation control value for controlling the turning actuator using the first control value; and
a torque control module for controlling a torque of the turning actuator according to the actuation control value, and

wherein the first determination module uses the vehicle velocity to adjust the first control value.

According to this configuration, the magnitude of torque of the turning actuator is adjusted by using the vehicle velocity, and therefore driving stability of the vehicle can be improved.

[Application Example 2]

The vehicle according to Application Example 1,
wherein the first determination module determines the first control value so that a ratio of a magnitude of a torque of the turning actuator indicated by the first control value to a magnitude of difference between the direction of the one or more turn wheels and the target direction is smaller when the vehicle velocity is higher, as compared to when the vehicle velocity is lower.
According to this configuration, when the vehicle velocity is lower, the magnitude of torque of the turning actuator is increased, and thereby the direction of the one or more turn wheels can approach the target direction appropriately. When the vehicle velocity is higher, the magnitude of torque of the turning actuator is decreased, and thereby the direction of the one or more turn wheels can change following a change in lean of the vehicle body. The above can enable driving stability of the vehicle to be improved.

[Application Example 3]

The vehicle according to Application Example 1 or 2,
wherein the first determination module uses a difference between the direction of the one or more turn wheels and the target direction to calculate the first control value through a feedback control.
According to this configuration, the turn control unit can appropriately set the torque of the turning actuator to a torque that causes the direction of the one or more turn wheels to approach the target direction, and therefore driving stability of the vehicle can be improved.

[Application Example 4]

The vehicle according to Application Example 3,
wherein the first determination module determines the first control value so that a magnitude of a torque of the turning actuator indicated by the first control value is larger when the difference between the direction of the one or more turn wheels and the target direction is larger, as compared to when the difference is smaller.
According to this configuration, the direction of the one or more turn wheels can appropriately approach the target direction, and therefore driving stability of the vehicle can be improved.

[Application Example 5]

The vehicle according to any one of Application Examples 1 to 4,
wherein the turn control unit includes a second determination module for determining a second control value for making smaller a magnitude of an angular velocity which is a rate of change of the direction of the one or more turn wheels, and wherein the actuation control value determination module uses at least the first control value and the second control value to determine the actuation control value.
According to this configuration, a rapid, significant change in the direction of the one or more turn wheels is suppressed, and therefore driving stability of the vehicle can be improved.

[Application Example 6]

The vehicle according to any one of Application Examples 1 to 5,
wherein the turn control unit includes a third determination module for determining a third control value for making smaller a magnitude of an angular acceleration which is an acceleration of change of the direction of the one or more turn wheels, and
wherein the actuation control value determination module uses at least the first control value and the third control value to determine the actuation control value.

According to this configuration, a rapid, significant change in the direction of the one or more turn wheels is suppressed, and therefore driving stability of the vehicle can be improved.

[Application Example 7]

The vehicle according to any one of Application Examples 1 to 6,
wherein the turn wheel support unit includes a connection which is connected to the operation input unit and to the supporting member, the connection allowing the direction of the one or more turn wheels to change following a change in lean of the vehicle body independently of the operation amount input into the operation input unit.

This configuration enables a user to modify the direction of the one or more turn wheels by handling the operation input unit, and thus improving driving stability.

It should be noted that the techniques disclosed in this specification can be realized in a variety of aspects, for example, a vehicle, a vehicle controller, a vehicle control method, etc.

Brief Description of the Drawings

Fig. 1 is a right side view of a vehicle 10;
Fig. 2 is a top view of the vehicle 10;
Fig. 3 is a bottom view of the vehicle 10;
Fig. 4 is a rear view of the vehicle 10;
Fig. 5 is schematic diagrams showing states of the vehicle 10;
Fig. 6 is an explanatory diagram showing a balance of forces during turning;
Fig. 7 is an explanatory diagram showing a simplified relationship between a wheel angle AF and a turning radius R;
Fig. 8 is an explanatory diagram illustrating forces which act on a rotating front wheel 12F;
Fig. 9 is a block diagram showing a configuration relating to control of the vehicle 10;
Fig. 10 is a flowchart showing an example control process;
Fig. 11 is a block diagram showing a portion of the controller 110 which is related to the control of the front wheel support device 41;
Fig. 12 is a flowchart showing an example process of controlling the steering motor 65;

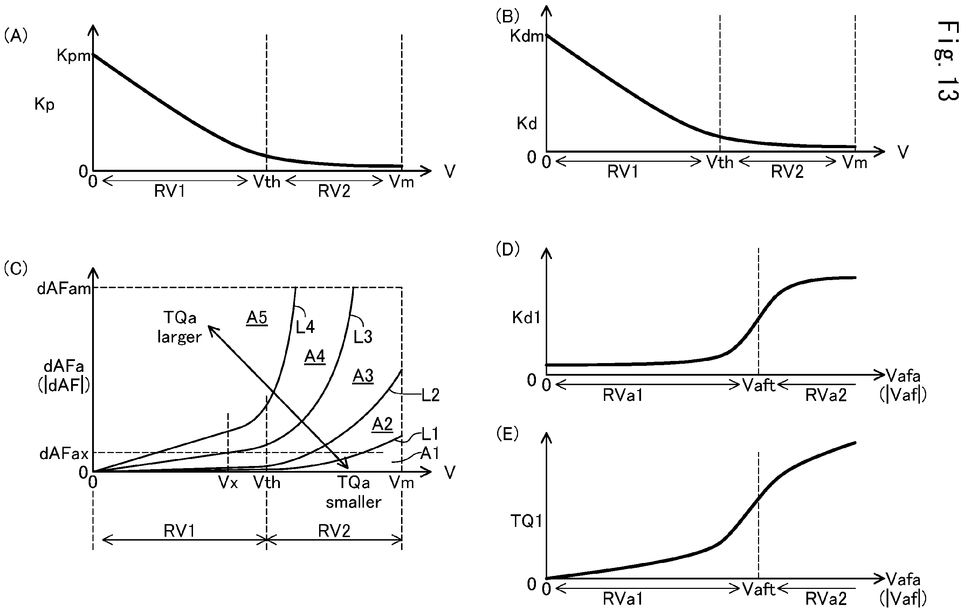

Fig. 13 is a graph showing a correspondence between the vehicle velocity V and the P gain Kp, a graph showing a correspondence between the vehicle velocity V and the D gain Kd, a graph showing an example correspondence among the vehicle velocity V, the magnitude dAFa of the wheel angle difference dAF, and the magnitude TQa of the torque, a graph showing a correspondence between the magnitude Vafa of the change rate Vaf of the wheel angle AF and the first gain Kd1, and a graph showing an example correspondence between the magnitude Vafa of the change rate Vaf of the wheel angle AF and the torque magnitude TQ1;
Fig. 14 is a graph showing a correspondence between the magnitude Aafa of the angular acceleration Aaf of the wheel angle AF and the second gain Kd2, and a graph showing an example correspondence between the magnitude Aafa of the angular acceleration Aaf of the wheel angle AF and the torque magnitude TQ2; and
Fig. 15 is a schematic diagram showing another embodiment of vehicle.

Detailed Description of the Invention

A. First Embodiment:

A1. Configuration of Vehicle 10:

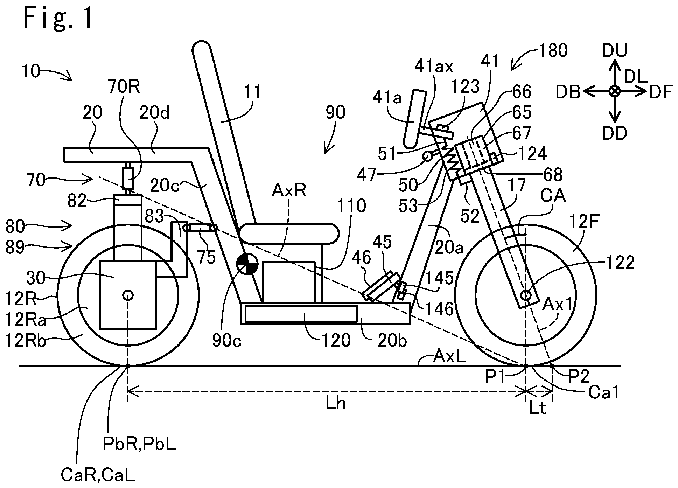

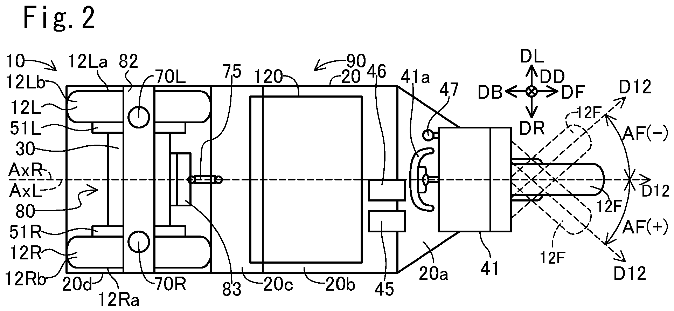

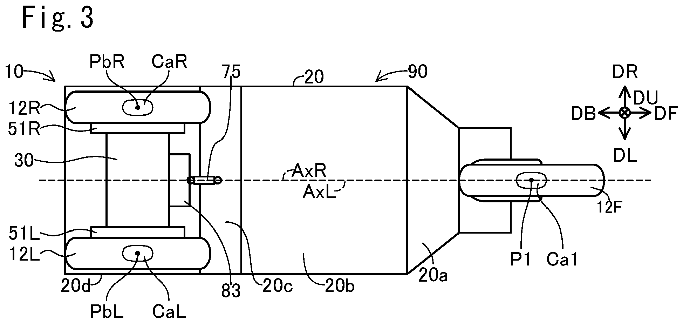

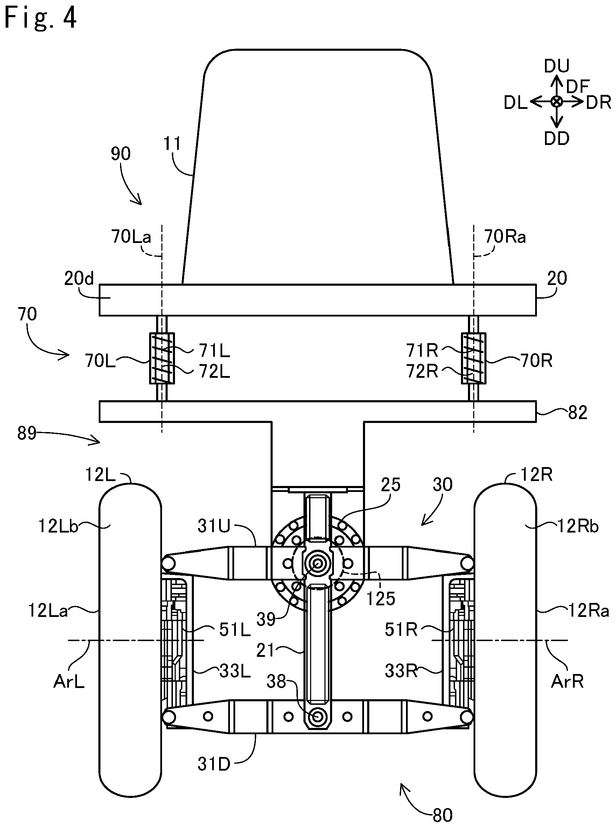

Figs. 1-4 show explanatory diagrams which illustrate a vehicle 10 as one embodiment. Fig. 1 shows a right side view of the vehicle 10, Fig. 2 shows a top view of the vehicle 10, Fig. 3 shows a bottom view of the vehicle 10, and Fig. 4 shows a rear view of the vehicle 10. In Figs. 2-4, only the components for use in illustration are shown that are included in the vehicle 10 configuration shown in Fig. 1, and the remaining components are omitted. In Figs. 1-4, six directions DF, DB, DU, DD, DR, and DL are shown. The front direction DF is a direction of forward movement of the vehicle 10, and the back direction DB is opposite to the front direction DF. The upward direction DU is a vertically upward direction, and the downward direction DD is opposite to the upward direction DU. The right direction DR is a right direction viewed from the vehicle 10 traveling in the front direction DF, and the left direction DL is opposite to the right direction DR. All the directions DF, DB, DR, and DL are horizontal directions. The right and left directions DR and DL are perpendicular to the front direction DF.

In this embodiment, this vehicle 10 is a small single-seater vehicle. The vehicle 10 (Figs. 1 and 2) is a tricycle which includes a vehicle body 90, a single front wheel 12F coupled to the vehicle body 90, and two rear wheels 12L, 12R coupled to the vehicle body 90 and spaced apart in the width direction of the vehicle 10 (i.e. a direction parallel to the right direction DR). The front wheel 12F is turnable to right and left, and is located at the center of the vehicle 10 in its width direction. The rear wheels 12L, 12R are drive wheels, and are located symmetrically with regard to the center of the vehicle 10 in its width direction.

The vehicle body 90 (Fig. 1) has a main body 20. The main body 20 has a front portion 20a, a bottom portion 20b, a rear portion 20c, and a support portion 20d. The bottom portion 20b is a plate-like portion which extends in the horizontal directions (i.e. directions perpendicular to the upward direction DU). The front portion 20a is a plate-like portion which extends obliquely from the end of the bottom portion 20b in the front direction DF side toward the front direction DF side and upward direction DU side. The rear portion 20c is a plate-like portion which extends obliquely from the end of the bottom portion 20b in the back direction DB side toward the back direction DB side and upward direction DU side. The support portion 20d is a plate-like portion which extends from the top of the rear portion 20c toward the back direction DB. For example, the main body 20 has a metal frame, and panels attached to the frame.

The vehicle body 90 (Fig. 1) further includes a seat 11 attached onto the bottom portion 20b, an accelerator pedal 45 and a brake pedal 46 located on the front direction DF side of the seat 11 on the bottom portion 20b, a controller 110 located below the seat surface of the seat 20 and attached onto the bottom portion 20b, a battery 120 attached to the bottom portion 20b below the controller 110, a front wheel support device 41 attached to the end in the front direction DF side of the front portion 20a, and a shift switch 47 attached to the front wheel support device 41. It should be noted that other members (e.g. roof, headlight, etc.) may be attached to the main body 20 although they are not shown in the figures. The vehicle body 90 includes the members attached to the main body 20.

The accelerator pedal 45 is a pedal for accelerating the vehicle 10. An amount of pressing the accelerator pedal 45 (sometimes referred to as "accelerator operation amount") represents an acceleration force desired by the user. The brake pedal 46 is a pedal for decelerating the vehicle 10. An amount of pressing the brake pedal 46 (sometimes referred to as "brake operation amount") represents a deceleration force desired by the user. The shift switch 47 is a switch for selecting a driving mode of the vehicle 10. In this embodiment, it is possible to select a mode from among four driving modes, "drive," "neutral," "reverse," and "parking." The "drive" mode is a mode for moving forward by driving the drive wheels 12L, 12R, the "neutral" mode is a mode in which the drive wheels 12L, 12R can rotate freely, the "reverse" mode is a mode for moving backward by driving the drive wheels 12L, 12R, the "parking" mode is a mode in which at least one wheel (e.g. rear wheels 12L. 12R) cannot rotate. The "drive" and "neutral" modes are typically used when the vehicle 10 moves forward.

The front wheel support device 41 (Fig. 1) is a device that supports the front wheel 12F so that it can be turned about a turning axis Ax1 to the turning direction of the vehicle 10. The front wheel support device 41 includes a front fork 17 rotatably supporting the front wheel 12F, a bearing 68 that supports the front fork 17 (i.e. front wheel 12F) turnably about the turning axis Ax1, and a steering motor 65 for turning the front fork 17. The vehicle 10 is also equipped with a steering wheel 41a as operation input unit to which the user inputs his/her desired turning direction and degree of the turn through the user's operation. Secured to the steering wheel 41a is a supporting rod 41ax which extends along the rotational axis of the steering wheel 41a. The supporting rod 41ax is coupled to the front wheel support device 41 rotatably about its rotational axis. Also, the front wheel support device 41 has a connection 50 that connects the supporting rod 41ax to the front fork 17. The connection 50 will be described in detail later.

For example, the front fork 17 (Fig. 1) is a telescopic fork with a built-in suspension (coil spring and shock absorber).

The bearing 68 couples the main body 20 (in this example, the front portion 20a) and the front fork 17. In addition, the bearing 68 supports the front fork 17 turnably to right and left relative to the front direction DF. The steering motor 65 includes a rotor 66 and a stator 67. One of the rotor 66 or stator 67 (in this embodiment, the rotor 66) is attached to the front fork 17. The other of the rotor 66 or stator 67 (in this embodiment, the stator 67) is attached to the main body 20 (in this example, the front portion 20a).

The steering wheel 41a (Fig. 1) can rotate about a supporting rod 41ax which extends along the rotational axis of the steering wheel 41a. The rotational direction of the steering wheel 41a (right or left) represents a turning direction desired by the user. The rotational degree of the steering wheel 41a relative to a predetermined orientation corresponding to the straight movement (i.e. rotational angle; hereinafter referred to as "steering wheel angle") represents a degree of turn desired by the user. In this embodiment, "steering wheel angle = 0" indicates straight movement, "steering wheel angle > 0" indicates a right turn, and "steering wheel angle < 0" indicates a left turn. In this manner, the positive and negative signs of steering wheel angle represent the turning direction. The absolute value of steering wheel angle represents the degree of turn. Such a steering wheel angle is an example operation amount that represents the turning direction and the degree of turn input to the steering wheel 41a.

The wheel angle AF (Fig. 2) is an angle with respect to the front direction DF of a moving direction D12 in which the front wheel 12F rolls when the vehicle 10 is viewed in the downward direction DD. This moving direction D12 is perpendicular to the rotational axis of the front wheel 12F. In this embodiment, "AF=0" indicates that "direction D12=front direction DF," "AF>0" indicates that the turning direction is the right direction DR (that is, the direction D12 is deflected toward the right direction DR side), and "AF<0" indicates that the turning direction is the left direction DL (that is, the direction D12 is deflected toward the left direction DL side). The controller 110 (Fig. 1) can control the steering motor 65 to change the orientation of the front fork 17 (i.e. the wheel angle AF of the front wheel 12F) according to the orientation of the steering wheel 41a handled by the user.

The controller 110 uses the large torque of the steering motor 65 to control the direction D12 of the front wheel 12F to approach a target direction specified using the steering wheel angle. Since the direction D12 of the front wheel 12F is controlled by the steering motor 65, the front wheel 12F is prevented from turning freely independently of the steering wheel angle. In this case, the wheel angle AF corresponds to a so-called steering angle. The controller 110 makes the torque of the steering motor 65 smaller to allow the direction D12 of the front wheel 12F to turn to right and left independently of the steering wheel angle. As described later, the controller 110 uses the vehicle velocity to adjust the torque of the steering motor 65.

As shown in Fig. 1, in this embodiment, when the vehicle 10 is placed on a horizontal ground GL, the turning axis Ax1 of the front wheel support device 41 is tilted obliquely relative to the ground GL, and specifically a direction which is parallel to the turning axis Ax1 and faces the downward direction DD side extends obliquely forward. Therefore, the intersection point P2 between the turning axis Ax1 of the front wheel support device 41 and the ground GL is located on the front direction DF side of the contact center P1 of the front wheel 12F with the ground GL. As shown in Figs. 1 and 3, the contact center P1 represents a center of contact area Ca1 between the front wheel 12F and the ground GL. The center of contact area represents a position of gravity center of the contact area. The gravity center of the area is a position of gravity center on the assumption that its mass is distributed evenly across the area. The distance Lt in the back direction DB between these points PI, P2 is referred to as a trail. A positive trail Lt indicates that the contact center PI is located on the back direction DB side of the intersection point P2. An angle CA between the vertically upward direction DU and a direction along the turning axis Ax1 toward the vertically upward direction DU side is also referred to as caster angle. The caster angle CA of larger than zero indicates that the direction along the turning axis Ax1 toward the vertically upward direction DU side is tilted diagonally backward.

The two rear wheels 12L, 12R (Fig. 4) are rotatably supported by a rear wheel support 80. The rear wheel support 80 includes a link mechanism 30, a lean motor 25 mounted on the top of the link mechanism 30, a first support portion 82 attached onto the top of the link mechanism 30, and a second support portion 83 attached to the front of the link mechanism 30 (Fig. 1). In Fig. 1, for purposes of illustration, portions of the link mechanism 30, first support portion 82, and second support portion 83 which are hidden by the right rear wheel 12R are also depicted in solid lines. In Fig. 2, for purposes of illustration, the rear wheel support 80, rear wheels 12L, 12R, and connector 75 which are hidden by the main body 20 are depicted in solid lines. In Figs. 1-3, the link mechanism 30 is depicted simply.

The first support portion 82 (Fig. 4) is located on the upward direction DU side of the link mechanism 30. The first support portion 82 includes a plate-like section which extends parallel to the right direction DR from a location in the upward direction DU side of the left rear wheel 12L to a location in the upward direction DU side of the right rear wheel 12R. The second support portion 83 (Fig. 1, Fig. 2) is located on the front direction DF side of the link mechanism 30 between the left rear wheel 12L and the right rear wheel 12R.

The right rear wheel 12R (Fig. 1) includes a wheel 12Ra with a rim, and a tire 12Rb mounted on the rim of the wheel 12Ra. The wheel 12Ra (Fig. 4) is connected to a right electric motor 51R. The right electric motor 51R has a stator and a rotor (not shown). One of the rotor or stator is attached to the wheel 12Ra, and the other is attached to the rear wheel support 80. The rotational axis of the right electric motor 51R is the same as that of the wheel 12Ra, and is parallel to the right direction DR. The configuration of the left rear wheel 12L is similar to that of the right rear wheel 12R. Specifically, the left rear wheel 12L has a wheel 12La and a tire 12Lb. The wheel 12La is connected to a left electric motor 51L. One of the rotor or stator of the left electric motor 51L is attached to the wheel 12La, and the other is attached to the rear wheel support 80. These electric motors 51L, 51R are in-wheel motors which directly drive the rear wheels 12L, 12R.

Figs. 1 and 4 show a state where the vehicle body 90 does not lean but stands upright (that is, a state where a lean angle T described later is equal to zero). In this state, a rotational axis ArL of the left rear wheel 12L and a rotational axis ArR of the right rear wheel 12R are aligned on a same line. Figs. 1 and 3 also show a contact center PbR between the right rear wheel 12R and the ground GL, and a contact center PbL between the left rear wheel 12L and the ground GL. As shown in Fig. 3, the right contact center PbR represents a center of contact area CaR between the right rear wheel 12R and the ground GL. The left contact center PbL represents a center of contact area CaL between the left rear wheel 12L and the ground GL. In the state of Fig. 1, these contact centers PbR, PbL are located at approximately the same position in the front direction DF.

The link mechanism 30 (Fig. 4) is a so-called parallel linkage. The link mechanism 30 includes three longitudinal link members 33L, 21, 33R arranged in order toward the right direction DR, and two lateral link members 31U, 31D arranged in order toward the downward direction DD. The longitudinal link members 33L, 21, 33R are parallel to the vertical direction when the vehicle body 90 stands upright without leaning. The lateral link members 31U, 31D are parallel to the horizontal direction when the body 90 stands upright without leaning. The two longitudinal link members 33L, 33R, and the two lateral link members 31U, 31D form a parallelogram link mechanism. The upper lateral link member 31U couples the upper ends of the longitudinal link members 33L, 33R. The lower lateral link member 31D couples the lower ends of the longitudinal link members 33L, 33R. The center longitudinal link member 21 couples the centers of the lateral link members 31U, 31D. These link members 33L, 33R, 31U, 31D, 21 are mutually coupled rotatably, and their rotational axes are parallel to the front direction DF. The left electric motor 51L is attached to the left longitudinal link member 33L. The right electric motor 51R is attached to the right longitudinal link member 33R. On the top of the center longitudinal link member 21, the first support portion 82 and second support portion 83 (Fig. 1) are secured. The link members 33L, 21, 33R, 31U, 31D, and the support portions 82, 83 are made of metal, for example.

In this embodiment, the link mechanism 30 has bearings for rotatably coupling link members. For example, a bearing 38 rotatably couples the lower lateral link member 31D to the center longitudinal link member 21, and a bearing 39 rotatably couples the upper lateral link member 31U to the center longitudinal link member 21. Other portions rotatably coupling link members are also provided with bearings although they are not specifically described here.

For example, the lean motor 25 is an electric motor having a stator and a rotor. One of the stator or rotor of the lean motor 25 is secured to the center longitudinal link member 21, and the other is secured to the upper lateral link member 31U. The rotational axis of the lean motor 25 is the same as that of the coupling portion (in this case, the bearing 39) of these link members 31U, 21, and is located at the center of the vehicle 10 in its width direction. When the rotor of the lean motor 25 rotates relative to the stator, the upper lateral link member 31U is tilted with respect to the center longitudinal link member 21. This causes the vehicle 10 to lean. A torque generated by the lean motor 25 (a torque which causes the upper lateral link member 31U to be tilted relative to the center longitudinal link member 21 in this embodiment) may be hereinafter referred to as lean torque. The lean torque causes the vehicle body 90 to lean.

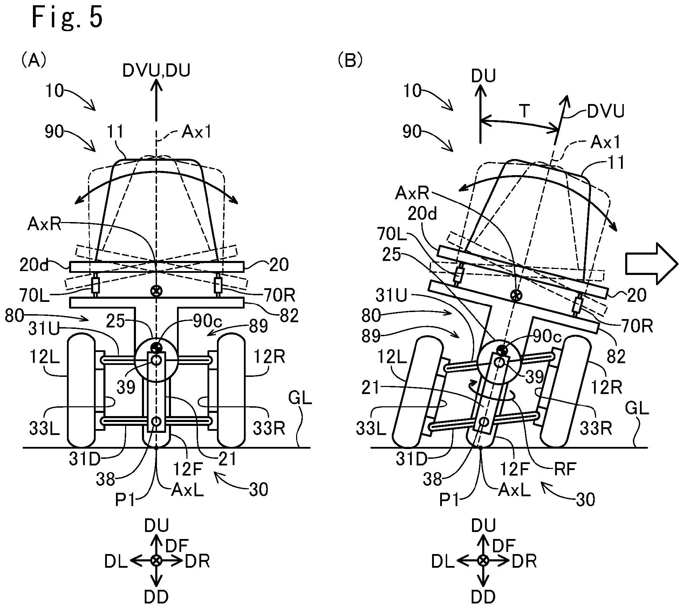

Fig. 5 shows a schematic diagram of the states of the vehicle 10. These figures show simplified rear views of the vehicle 10. Fig. 5(A) shows the state in which the vehicle 10 stands upright while Fig. 5(B) shows the state in which the vehicle 10 leans. As shown in Fig. 5(A), when the upper lateral link member 31U is perpendicular to the center longitudinal link member 21, all of the wheels 12F, 12L, 12R stand upright relative to the flat ground GL. Also, the whole vehicle 10 including the vehicle body 90 stands upright relative to the ground GL. A vehicle upward direction DVU in the figure represents the upward direction of the vehicle 10. With the vehicle 10 not leaning, the vehicle upward direction DVU is the same as the upward direction DU. In this embodiment, the orientation of the member of the rear wheel support 80 (specifically, the orientation of the center longitudinal link member 21) that leans along with the vehicle body 90 is adopted as the vehicle upward direction DVU

As shown in Fig. 5(B), when the upper lateral link member 31U is tilted relative to the center longitudinal link member 21, one of the right rear wheel 12R or left rear wheel 12L moves in the vehicle upward direction DVU side while the other moves in an opposite direction side to the vehicle upward direction DVU That is, the link mechanism 30 and the lean motor 25 change the relative position, in a direction perpendicular to the rotational axis, between the pair of wheels 12L, 12R spaced apart in the width direction. As a result, these wheels 12F, 12L, 12R lean relative to the ground GL while all of the wheels 12F, 12L, 12R have contact with the ground GL. Also, the whole vehicle 10 including the vehicle body 90 leans relative to the ground GL. In the example of Fig. 5(B), the right rear wheel 12R moves in the vehicle upward direction DVU side while the left rear wheel 12L moves in the opposite direction side. As a result, the wheels 12F, 12L, 12R, and thus the whole vehicle 10 including the vehicle body 90 lean to the right direction DR side. As described later, when the vehicle 10 turns to the right direction DR side, the vehicle 10 leans to the right direction DR side. When the vehicle 10 turns to the left direction DL side, the vehicle 10 leans to the left direction DL side.

In Fig. 5(B), the vehicle upward direction DVU is tilted in the right direction DR side relative to the upward direction DU. Hereinafter, when the vehicle 10 is viewed in the front direction DF, the angle between the upward direction DU and the vehicle upward direction DVU is referred to as lean angle T. Where "T>0" indicates a lean to the right direction DR side while "T<0" indicates a lean to the left direction DL side. When the vehicle 10 leans, the vehicle body 90 also leans to substantially the same direction. The lean angle T of the vehicle 10 can be considered as the lean angle T of the vehicle body 90.

The lean motor 25 has a lock mechanism (not shown) for unrotatably locking the lean motor 25. By operating the lock mechanism, the upper lateral link member 31U is unrotatably locked relative to the center longitudinal link member 21. As a result, the lean angle T is fixed. For example, the lean angle T is fixed to zero when the vehicle 10 is parked. Preferably, the lock mechanism is a mechanical mechanism which consumes no electric power when locking the lean motor 25 (and thus the link mechanism 30).

A lean axis AxL is shown in Fig. 5(A) and (B). The lean axis AxL is located on the ground GL. The link mechanism 30 and the lean motor 25 can cause the vehicle 10 to lean to right and left about the lean axis AxL. In this embodiment, the lean axis AxL is located on the ground GL, and is a straight line which passes through a contact center PI between the front wheel 12F and the ground GL, and which is parallel to the front direction DF. The link mechanism 30 for rotatably supporting the rear wheels 12L, 12R, and the lean motor 25 as an actuator for actuating the link mechanism 30 constitute a lean mechanism 89 which leans the vehicle body 90 in the width direction of the vehicle 10. The lean angle T is a lean angle caused by the lean mechanism 89.

The vehicle body 90 (specifically, main body 20) is coupled to the rear wheel support 80 rotatably about a roll axis AxR which extends from the back direction DB side toward the front direction DF side, as shown in Figs. 1, 5(A), and 5(B). In this embodiment, the main body 20 is coupled to the rear wheel support 80 via a suspension system 70 and the connector 75, as shown in Figs. 2 and 4.

The suspension system 70 (Fig. 4) has a left suspension 70L and a right suspension 70R. The left suspension 70L includes a coil spring 71L and a shock absorber 72L, and the right suspension 70R includes a coil spring 71R and a shock absorber 72R. In this embodiment, each suspension 70L, 70R is a telescopic suspension with built-in coil spring 71L, 71R and shock absorber 72L, 72R. Each suspension 70L, 70R can extend or retract along a central axis 70La, 70Ra (Fig. 4) of each suspension 70L, 70R.

When the vehicle 10 stands upright as shown in Fig. 4, the axis of each suspension 70L, 70R is approximately parallel to the vertical direction. The upper ends of the suspensions 70L, 70R are coupled to the support portion 20d of the main body 20 rotatably about a rotational axis parallel to a first axis direction (e.g. the front direction DF). The lower ends of the suspensions 70L, 70R are coupled to the first support portion 82 of the rear wheel support 80 rotatably about a rotational axis parallel to a second axis direction (e.g. the right direction DR). It should be noted that the configuration of the coupling portions between the suspensions 70L, 70R and the other members may be a variety of other configurations (e.g. ball-and-socket joint).

The connector 75 is a rod which extends in the front direction DF as shown in Figs. 1 and 2. The connector 75 is located at the center of the vehicle 10 in its width direction. The end of the connector 75 in the front direction DF side is coupled to the rear portion 20c of the main body 20. The coupling portion is configured as ball-and-socket joint, for example. The connector 75 can move in any direction relative to the rear portion 20c within a predetermined range. The end of the connector 75 in the back direction DB side is coupled to the second support portion 83 of the rear wheel support 80. The coupling portion is configured as ball-and-socket joint, for example. The connector 75 can move in any direction relative to the second support portion 83 within a predetermined range.

In this manner, the main body 20 (and thus the vehicle body 90) is coupled to the rear wheel support 80 via the suspension system 70 and the connector 75. The vehicle body 90 is movable relative to the rear wheel support 80. The roll axis AxR of Fig. 1 represents a central axis about which the vehicle body 90 rotates relative to the rear wheel support 80 in the right direction DR or left direction DL. In this embodiment, the roll axis AxR is a straight line which passes through the contact center PI between the front wheel 12F and the ground GL, and through the vicinity of the connector 75. The vehicle body 90 can rotate in its width direction about the roll axis AxR through the extension/retraction of the suspensions 70L, 70R. It should be noted that in this embodiment, the lean axis AxL about which leaning occurs through the lean mechanism 89 is different form the roll axis AxR.

In Fig. 5(A) and (B), the vehicle body 90 which rotates about the roll axis AxR is shown in dotted lines. The roll axis AxR in this figure represents a location of the roll axis AxR on a plane which includes the suspensions 70L, 70R, and which is perpendicular to the front direction DF. As shown in Fig. 5(B), the vehicle body 90 can also rotate about the roll axis AxR to the right direction DR and to the left direction DL even when the vehicle 10 leans.

The vehicle body 90 can rotate in the width direction of the vehicle 10 relative to the vertically upward direction DU (and thus the ground GL) through a rotation by the rear wheel support 80 and a rotation by the suspension system 70 and connector 75. The rotation of the vehicle body 90 in its width direction achieved in an integrated manner in the overall vehicle 10 may be referred to as roll. In this embodiment, the roll of the vehicle body 90 is principally caused through all of the rear wheel support 80, the suspension system 70, and the connector 75. A roll is also caused by a deformation of the members of the vehicle 10, such as the vehicle body 90 and the tires 12Rb, 12Lb.

A gravity center 90c is shown in Figs. 1, 5(A), and 5(B). This gravity center 90c is a gravity center of the vehicle body 90 under a full load condition. The full load condition means that the vehicle 10 carries an occupant (and possibly a load) so that the gross weight of the vehicle 10 becomes the acceptable gross weight. For example, no maximum loading weight may be specified, but a maximum riding capacity may be specified. In this case, the gravity center 90c is a gravity center when the vehicle 10 is filled to its maximum riding capacity. A reference body weight (e.g. 55kg) preset corresponding to the maximum riding capacity is adopted as occupant's body weight. Alternatively, a maximum loading weight may be specified in addition to a maximum riding weight. In this case, the gravity center 90c is a gravity center of the vehicle body 90 when the vehicle 10 is filled to its maximum riding capacity and maximum loading capacity.

As shown, the gravity center 90c is located on the downward direction DD side of the roll axis AxR. Therefore, if the vehicle body 90 oscillates about the roll axis AxR, an excessive increase in amplitude of oscillation can be suppressed. In this embodiment, the battery 120, which is a relatively heavy element among the elements of the vehicle body 90 (Fig. 1), is located in a lower position in order to locate the gravity center 90c on the downward direction DD side of the roll axis AxR. Specifically, the battery 120 is secured to the bottom portion 20b, which is the lowest portion among the main body 20 of the vehicle body 90. Therefore, the gravity center 90c can be easily made lower than the roll axis AxR.

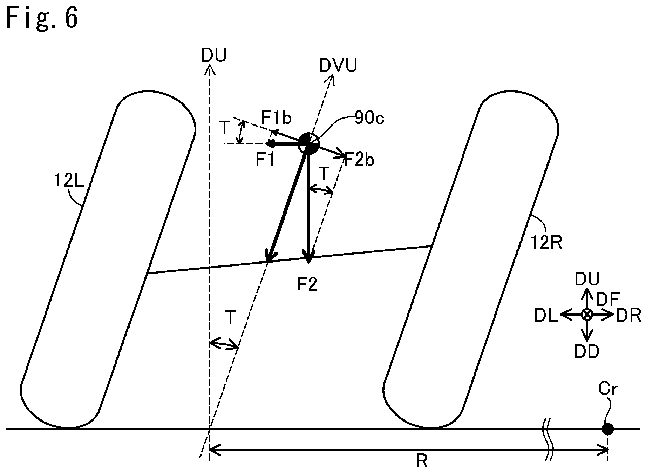

Fig. 6 shows an explanatory diagram illustrating a balance of forces during turning. This figure shows a rear view of the rear wheels 12L, 12R during turning to right. As described later, when the turning direction is the right direction, the controller 110 (Fig. 1) can control the lean motor 25 so that the rear wheels 12L, 12R (and thus the vehicle 10) lean relative to the ground GL to the right direction DR.

A first force F1 in the figure is a centrifugal force acting on the vehicle body 90. A second force F2 is a gravity acting on the vehicle body 90. Where the mass of the vehicle body 90 is m (kg), the acceleration of gravity is g (about 9.8m/s$^2$), the lean angle of the vehicle 10 relative to the vertical direction is T (degrees), the velocity of the vehicle 10 during turning is V (m/s), and the turning radius is R (m). The first force F1 and the second force F2 are expressed in Equations 1 and 2, respectively:

$$F1 = (m*V^2)/R \quad \text{(Equation 1)}$$

$$F2 = m*g \quad \text{(Equation 2)}$$

Where * represents a multiplication sign (hereinafter the same shall apply).

In addition, a force F1b in the figure is a component of the first force F1 in a direction perpendicular to the vehicle upward direction DVU A force F2b is a component of the second force F2 in a direction perpendicular to the vehicle upward direction DVU The force F1b and the force F2b are expressed in Equations 3 and 4, respectively:

$$F1b = F1*\cos(T) \quad \text{(Equation 3)}$$

$$F2b = F2*\sin(T) \quad \text{(Equation 4)}$$

Where "cos()" is a cosine function, and "sin()" is a sine function (hereinafter the same shall apply).

The force F1b is a component which causes the vehicle upward direction DVU to be rotated to the left direction DL side while the force F2b is a component which causes the vehicle upward direction DVU to be rotated to the right direction DR side. When the vehicle 10 continues to turn stably with the lean angle T (and furthermore the velocity V and turning radius R) maintained, the relationship between F1b and F2b is expressed in the following equation 5:

$$F1b = F2b \quad \text{(Equation 5)}$$

By substituting Equations 1-4 as discussed above into Equation 5, the turning radius R is expressed in Equation 6:

$$R = V^2/(g*\tan(T)) \quad \text{(Equation 6)}$$

Where "tan()" is a tangent function (hereinafter the same shall apply).

Equation 6 is established independently of the mass m of the vehicle body 90. Equation 6a below, which is obtained by substituting "T" in Equation 6 with a parameter Ta (in this case, absolute value of lean angle T) representing the magnitude of the lean angle without distinction between the right and left directions, is true regardless of the lean direction of the vehicle body 90:

$$R = V^2/(g*\tan(Ta)) \quad \text{(Equation 6a)}$$

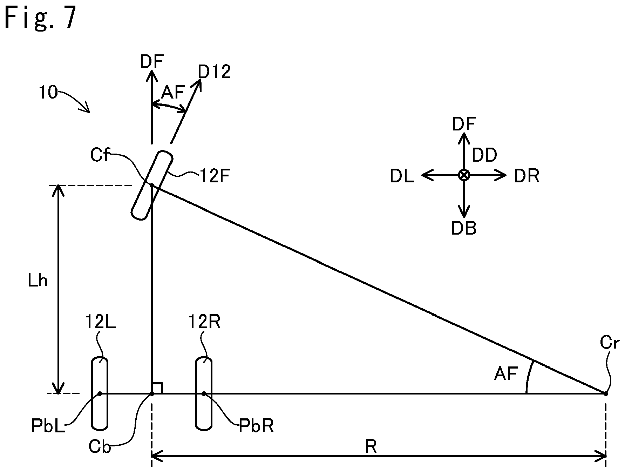

Fig. 7 is an explanatory diagram showing a simplified relationship between the wheel angle AF and the turning radius R. This figure shows the wheels 12F, 12L, 12R viewed in the downward direction DD. In the figure, the front wheel 12F turns to the right direction DR, and thus the vehicle 10 turns to the right direction DR. A front center Cf in the figure is the center of the front wheel 12F. The front center Cf is located on the rotational axis of the front wheel 12F. The front center Cf is located at approximately the same position as the contact center PI (Fig. 1) when the vehicle 10 is viewed in the downward direction DD. A rear center Cb is the center between the two rear wheels 12L, 12R. The rear center Cb is located at the middle between the rear wheels 12L, 12R on the rotational axis of the rear wheels 12L, 12R when the vehicle body 90 does not lean. The rear center Cb has the same location as a midpoint between the contact centers PbL, PbR of the two rear wheels 12L, 12R when the vehicle 10 is viewed in the downward direction DD. A center Cr is the turning center (referred to as turning center Cr). A wheelbase Lh is the distance between the front center Cf and the rear center Cb in the front direction DF. As shown in Fig. 1, the wheelbase Lh is the distance between the rotational axis of the front wheel 12F and that of the rear wheels 12L, 12R in the front direction DF.

As shown in Fig. 7, the front center Cf, rear center Cb, and turning center Cr form a right angled triangle. The internal angle of the vertex Cb is 90 degrees. The internal angle of the vertex Cr is equal to the wheel angle AF. Therefore, the relationship between the wheel angle AF and the turning radius R is expressed in Equation 7:

$$AF = \arctan(Lh/R) \quad \text{(Equation 7)}$$

Where "arctan()" is an inverse function of tangent function (hereinafter the same shall apply).

It should be noted that there are a variety of difference between the actual behavior of the vehicle 10 and the simplified behavior in Fig. 7. For example, the actual wheels 12F, 12L, 12R can slip relative to the ground GL. In addition, the actual front wheel 12F and rear wheels 12L, 12R lean. Therefore, the actual turning radius may be different from the turning radius R in Equation 7. However, Equation 7 can be used as a good approximate equation which represents the relationship between the wheel angle Af and the turning radius R.

When the vehicle 10 leans to the right direction DR side during its forward movement as shown in Fig. 5(B), the gravity center 90c of the vehicle body 90 moves to the right direction DR side, and thus the traveling direction of the vehicle 10 changes to the right direction DR side. This also causes the front wheel support device 41 (Fig. 1) (and thus the turning axis Ax1 (Fig. 5(B))) to move to the right direction DR side. On the other hand, the contact center PI between the front wheel 12F and the ground GL cannot readily move to the right direction DR side due to friction. And, in this embodiment, the wheel 12F has a positive trail Lt as described with reference to Fig. 1. That is, the contact center PI is located on the back direction DB side of the intersection point P2 between the turning axis Ax1 and the ground GL. As a result, when the vehicle 10 leans to the right direction DR side during its forward movement, the orientation of the front wheel 12F (i.e. moving direction D12 (Fig. 2)) can spontaneously turn to the new traveling direction of the vehicle 10, that is, its lean direction (right direction DR in the example of Fig. 5(B)). A turning direction RF in Fig. 5(B) represents a turning direction of the front wheel 12F about the turning axis Ax1 when the vehicle body 90 leans to the right direction DR side. When the torque of the steering motor 65 is smaller, the orientation of the front wheel 12F spontaneously turns to the lean direction following beginning of change in the lean angle T. Thus, the vehicle 10 turns toward the lean direction.

In addition, the behavioral stability of the vehicle 10 is improved because the forces F1b, F2b (Fig. 6, Equation 5) balance each other when the turning radius is equal to the turning radius R expressed in Equation 6 (and thus Equation 6a) discussed above. The vehicle 10 turning at the lean angle T will turn in the turning radius R expressed in Equation 6. In addition, the moving direction D12 of the front wheel 12F spontaneously faces the traveling direction of the vehicle 10 because the vehicle 10 has a positive trail Lt. Therefore, when the vehicle 10 turns at the lean angle T, the orientation (i.e. wheel angle AF) of the front wheel 12F turnable to right and left can settle at an orientation of the wheel angle AF determined based on the turning radius R expressed in Equation 6, and Equation 7. In this manner, the wheel angle AF changes following a lean of the vehicle body 90.

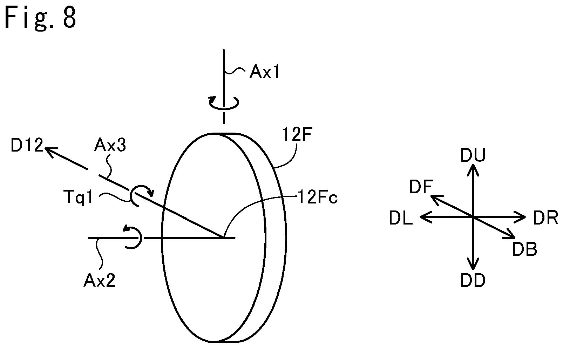

Furthermore, in this embodiment, when the vehicle body 90 leans, the front wheel 12F is subject to a force that rotates the wheel angle AF to the lean direction independently of the trail Lt. Fig. 8 is an explanatory diagram illustrating forces which act on the rotating front wheel 12F. This figure shows a perspective view of the front wheel 12F. In the example of Fig. 8, the direction D12 of the front wheel 12F is the same as the front direction DF. A rotational axis Ax2 is a rotational axis of the front wheel 12F. When the vehicle 10 moves forward, the front wheel 12F rotates about this rotational axis Ax2. The figure shows the turning axis Ax1 of the front wheel support device 41 (Fig. 1) and a front axis Ax3. The turning axis Ax1 extends from the upward direction DU side to the downward direction DD side. The front axis Ax3 is an axis which passes through the gravity center 12Fc of the front wheel 12F and is parallel to the direction D12 of the front wheel 12F. It should be noted that the rotational axis Ax2 of the front wheel 12F also passes through the gravity center 12Fc of the front wheel 12F.

As described with reference to Fig. 1 etc., in this embodiment, the front wheel support device 41, which supports the front wheel 12F, is secured to the vehicle body 90. Therefore, when the vehicle body 90 leans, the front wheel support device 41 leans along with the vehicle body 90, and thus the rotational axis Ax2 of the front wheel 12F will also lean to the same direction in a similar fashion. When the vehicle body 90 of the moving vehicle 10 leans to the right direction DR side, the front wheel 12F, which rotates about the rotational axis Ax2, is subject to a torque Tq1 (Fig. 8) that causes the front wheel 12F to lean to the right direction DR side. This torque Tq1 includes a component of force that acts to lean the front wheel 12F about the front axis Ax3 to the right direction DR side. Such a movement of a rotating object when an external torque is applied to the object is known as precession movement. For example, the rotating object turns about an axis perpendicular to the rotational axis and the axis of the external torque. In the example of Fig. 8, the application of the torque Tq1 causes the rotating front wheel 12F to turn about the turning axis Ax1 of the front wheel support device 41 to the right direction DR side. In this manner, due to the angular momentum of the rotating front wheel 12F, the direction D12 of the front wheel 12F (i.e. wheel angle AF) changes following a lean of the vehicle body 90.

The above description refers to the case where the vehicle 10 leans to the right direction DR side. Similarly, the direction D12 of the front wheel 12F (i.e. wheel angle AF) turns to the left direction DL side following the lean of the vehicle body 90 when the vehicle 10 leans to the left direction DL side.

In this manner, when the torque of the steering motor 65 is smaller, the front wheel support device 41 supports the front wheel 12F as follows. That is, the front wheel 12F can turn to right and left relative to the vehicle body 90 following a change in lean of the vehicle body 90 independently of information input to the steering wheel 41a. For example, even if the steering wheel 41a is maintained in the predetermined direction corresponding to the straight movement, the front wheel 12F can turn to right following a change in the lean angle T when the lean angle T of the vehicle body 90 changes toward right (i.e. the wheel angle AF can change toward right). The front wheel support device 41 supporting the front wheel 12F in this manner may be restated as follows. That is, the front wheel support device 41 supports the front wheel 12F turnably to right and left relative to the vehicle body 90 following a change in lean of the vehicle body 90 so that the wheel angle AF of the front wheel 12F for a single operation amount input to the steering wheel 41a is not restricted to a single wheel angle AF.

As illustrated in Fig. 1, the supporting rod 41ax secured to the steering wheel 41a and the front fork 17, which is an example supporting member for rotatably supporting the front wheel 12F, are connected via the connection 50. The connection 50 includes a first portion 51 secured to the supporting rod 41ax, a second portion 52 secured to the front fork 17, and a third portion 53 which connects the first portion 51 and the second portion 52. The connection 50 is connected indirectly to the steering wheel 41a via the supporting rod 41ax, and is connected directly to the front fork 17. The third portion 53 in this embodiment is an elastic body, and is specifically a coil spring. When a user rotates the steering wheel 41a to right or left, a rightward or leftward force applied by the user to the steering wheel 41a is transmitted via the connection 50 to the front fork 17. That is, the user can apply a rightward or leftward force to the front fork 41 and thus the front wheel 12F by handling the steering wheel 41a. This allows the user to adjust the orientation (i.e. wheel angle AF) of the front wheel 12F by handling the steering wheel 41a when the front wheel 12F does not face to his/her intended direction (that is, the wheel angle AF is different from his/her intended angle). This can result in improved driving stability. For example, when the wheel angle AF changes in response to external factors such as irregularities of road surface or wind, the user can adjust the wheel angle AF by handling the steering wheel 41a.

It should be noted that the connection 50 connects loosely the steering wheel 41a and the front fork 17. For example, the spring constant of the third portion 53 of the connection 50 is set to a sufficiently small value. Such a connection 50 allows the front wheel 12F to turn to right and left relative to the vehicle body 90 following a change in lean of the vehicle body 90 independently of the steering wheel angle input to the steering wheel 41a when the steering the torque of the steering motor 65 is smaller. Therefore, the driving stability is improved because the wheel angle AF can change to an angle appropriate for the lean angle T. It should be noted that the vehicle 10 can operate as follows when the connection 50 achieves the loose connection, that is, the front wheel 12F is allowed to turn as described above. For example, even if the steering wheel 41a is rotated to left, the front wheel 12F can turn to right when the vehicle body 90 leans to right. In addition, no one-to-one correspondence between the steering wheel angle and the wheel angle AF is maintained when the steering wheel 41a is rotated to right and left while the vehicle 10 stops on a flat and dry asphalt road. A force applied to the steering wheel 41a is transmitted via the connection 50 to the front fork 17, and thus the wheel angle AF can change according to a change in the steering wheel angle. However, when the orientation of the steering wheel 41a is adjusted so that the steering wheel angle takes a single specific value, the wheel angle AF can change without being fixed at a single value. For example, the steering wheel 41a is rotated to right while both the steering wheel 41a and the front wheel 12F face to the straight movement direction. This causes the front wheel 12F to face to the right. Thereafter, the steering wheel 41a is brought back again to the straight movement direction. At this time, the front wheel 12F does not face to the straight movement direction, but can be maintained so that it faces to the right. In addition, the vehicle 10 may not be able turn to the direction of the steering wheel 41a even if the steering wheel 41a is rotated to right or left. Furthermore, when the vehicle 10 is stopped, a ratio of change amount in wheel angle AF to that in steering wheel angle can be smaller as compared to the case where the vehicle 10 is running.

A2. Control of Vehicle 10:

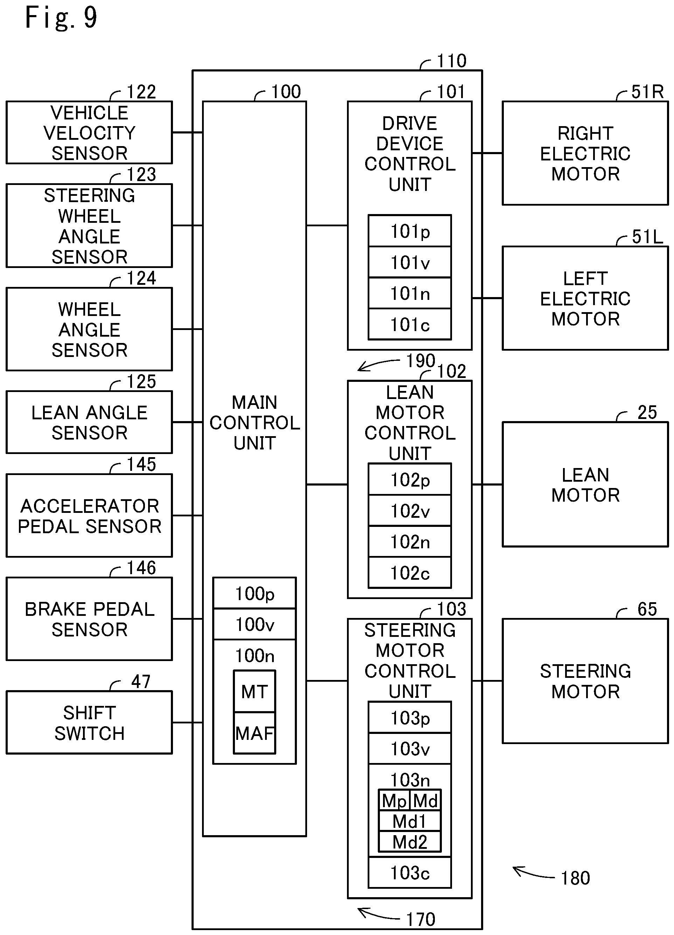

Fig. 9 is a block diagram showing the configuration relating to control of the vehicle 10. The vehicle 10 includes, as components for the control, a vehicle velocity sensor 122, a steering wheel angle sensor 123, a wheel angle sensor 124, a lean angle sensor 125, an accelerator pedal sensor 145, a brake pedal sensor 146, a shift switch 47, a controller 110, a right electric motor 51R, a left electric motor 51L, a lean motor 25, and a steering motor 65.

The vehicle velocity sensor 122 is a sensor for detecting a vehicle velocity of the vehicle 10. In this embodiment, the vehicle velocity sensor 122 is attached on the lower end of the front fork 17 (Fig. 1) to detect a rotational rate of the front wheel 12F, i.e. vehicle velocity.

The steering wheel angle sensor 123 is a sensor for detecting an orientation of the steering wheel 41a (i.e. steering wheel angle). In this embodiment, the steering wheel angle sensor 123 is attached to the supporting rod 41ax secured to the steering wheel 41a (Fig. 1).

The wheel angle sensor 124 is a sensor for detecting a wheel angle AF of the front wheel 12F. In this embodiment, the wheel angle sensor 124 is attached to the steering motor 65 (Fig. 1).

The lean angle sensor 125 is a sensor for detecting a lean angle T. The lean angle sensor 125 is attached to the lean motor 25 (Fig. 4). As discussed above, the orientation of the center longitudinal link member 21 relative to the upper lateral link member 31U corresponds to the lean angle T. The lean angle sensor 125 detects the orientation of the center longitudinal link member 21 relative to the upper lateral link member 31U, i.e. the lean angle T.

The accelerator pedal sensor 145 is a sensor for detecting an accelerator operation amount. In this embodiment, the accelerator pedal sensor 145 is attached to the accelerator pedal 45 (Fig. 1). The brake pedal sensor 146 is a sensor for detecting a brake operation amount. In this embodiment, the brake pedal sensor 146 is attached to the brake pedal 46 (Fig. 1).

It should be noted that each sensor 122, 123, 124, 125, 145, 146 is configured using a resolver or encoder, for example.

The controller 110 includes a main control unit 100, a drive device control unit 101, a lean motor control unit 102, and a steering motor control unit 103. The controller 110 operates with electric power from the battery 120 (Fig. 1). In this embodiment, the control units 100, 101, 102, 103 each has a computer. More specifically, the control units 100, 101, 102, 103 include processors 100p, 101p, 102p, 103p (e.g. CPU), volatile memories 100v, 101v, 102v, 103v (e.g. DRAM), and non-volatile memories 100n, 101n, 102n, 103n (e.g. flash memory), respectively. The non-volatile memories 100n, 101n, 102n, 103n store in advance programs for operating the corresponding control units 100, 101, 102, 103, respectively (not shown). In addition, the non-volatile memory 100n of the main control unit 100 stores in advance map data MT, MAF, which represents maps referenced in a process described later. The processors 100p, 101p, 102p, 103p perform a variety of processes by executing the corresponding programs, respectively.

The processor 100p of the main control unit 100 receives signals from the sensors 122, 123, 124, 125, 145, 146 and from the shift switch 47, and then controls the vehicle 10 according to the received signals. Specifically, the processor 100p of the main control unit 100 controls the vehicle 10 by outputting instructions to the drive device control unit 101, the lean motor control unit 102, and the steering motor control unit 103 (described in detail later).

The processor 101p of the drive device control unit 101 controls the electric motors 51L, 51R according to the instruction from the main control unit 100. The processor 102p of the lean motor control unit 102 controls the lean motor 25 according to the instruction from the main control unit 100. The processor 103p of the steering motor control unit 103 controls the steering motor 65 according to the instruction from the main control unit 100. These control units 101, 102, 103 have respective electric circuits 101c, 102c, 103c (e.g. inverter circuit) which supply electric power from the battery 120 to the respective electric motors 51L, 51R, 25, 65 under their own control.

Hereinafter, a phrase "a processor 100p, 101p, 102, 103p of a control unit 100, 101, 102, 103 performs a process" is sometimes expressed briefly as a phrase "a control unit 100, 101, 102, 103 performs a process."

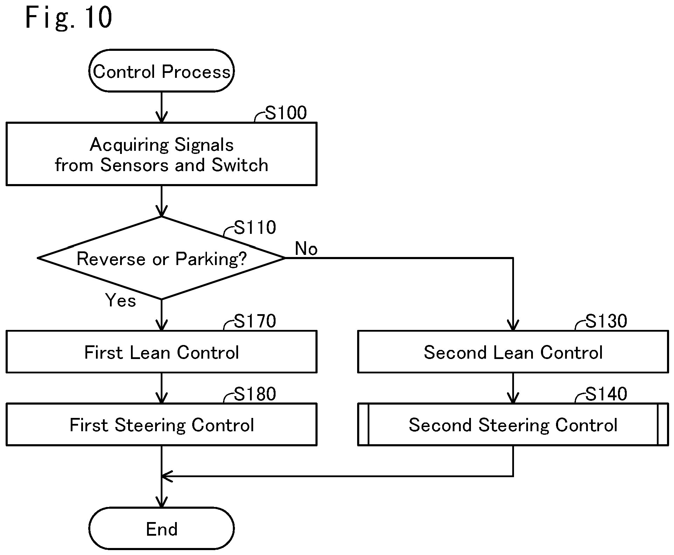

Fig. 10 is a flowchart showing an example control process performed by the controller 110 (Fig. 9). The flowchart of Fig. 10 shows a procedure for controlling the rear wheel support 80 and the front wheel support device 41. In Fig. 10, each process step has a reference number of an alphabet "S" followed by a numeral.

In S100, the main control unit 100 acquires signals from the sensors 122, 123, 124, 125, 145, 146 and from the shift switch 47. This allows the main control unit 100 to determine the velocity V, steering wheel angle, wheel angle AF, lean angle T, accelerator operation amount, brake operation amount, and driving mode.

In S110, the main control unit 100 determines whether or not a condition is met that 'the driving mode is either "reverse" or "parking." If the driving mode is not "reverse" or "parking" (i.e. if the driving mode is either "drive" or "neutral"), the determination result in S110 is "No." Accordingly, the main control unit 100 proceeds to S130. The determination result of "No" in S110 usually indicates that the vehicle 10 is moving forward.

In S130, the main control unit 100 specifies a first target lean angle T1 mapped to the steering wheel angle. In this embodiment, the first target lean angle T1 is a value obtained by multiplying the steering wheel angle (in degrees) by a predetermined coefficient (e.g. 30/60). It should be noted that instead of the proportional relationship, a variety of relationships such that the larger the absolute value of steering wheel angle is, the larger is the absolute value of first target lean angle T1 may be adopted as a correspondence between the steering wheel angle and the first target lean angle T1. Information which represents the correspondence between the steering wheel angle and the first target lean angle T1 is predetermined by map data MT stored in the non-volatile memory 100n of the main control unit 100. The main control unit 100 references this map data MT to specify the first target lean angle T1 corresponding to the steering wheel angle according to the predetermined correspondence in the referenced data. The first target lean angle T1 may be determined based on the steering wheel angle and another information (e.g. the vehicle velocity V).

It should be noted that as described above, Equation 6 represents the correspondence among the lean angle T, the velocity V, and the turning radius R, and Equation 7 represents the correspondence between the turning radius R and the wheel angle AF. These Equations 6 and 7 can be combined to specify the correspondence among the lean angle T, the velocity V, and the wheel angle AF. It may be considered that the correspondence between the steering wheel angle and the first target lean angle T1 maps the steering wheel angle to the wheel angle AF via the correspondence among the lean angle T, the velocity V, and the wheel angle AF (where the wheel angle AF can be vary depending upon the velocity V).

The main control unit 100 (Fig. 9) supplies the lean motor control unit 102 with an instruction for controlling the lean motor 25 so that the lean angle T is equal to the first target lean angle T1. According to the instruction, the lean motor control unit 102 drives the lean motor 25 so that the lean angle T is equal to the first target lean angle T1. This causes the lean angle T of the vehicle 10 to be changed to the first target lean angle T1 mapped to the steering wheel angle. In this embodiment, the lean motor control unit 102 performs a feedback control of the lean motor 25 which uses a difference between the lean angle T and the first target lean angle T1. For example, a so-called PID (Proportional Integral Derivative) control is performed. When the absolute value of the difference between the lean angle T and the first target lean angle T1 is larger, this control causes the torque of the lean motor 25 to be increased, and thus the lean angle T to approach the first target lean angle T1. The main control unit 100 and the lean motor control unit 102 as a whole serve as a lean control unit (sometimes referred to as lean control unit 190) for controlling the link mechanism 30 and lean motor 25 which lean the vehicle body 90.

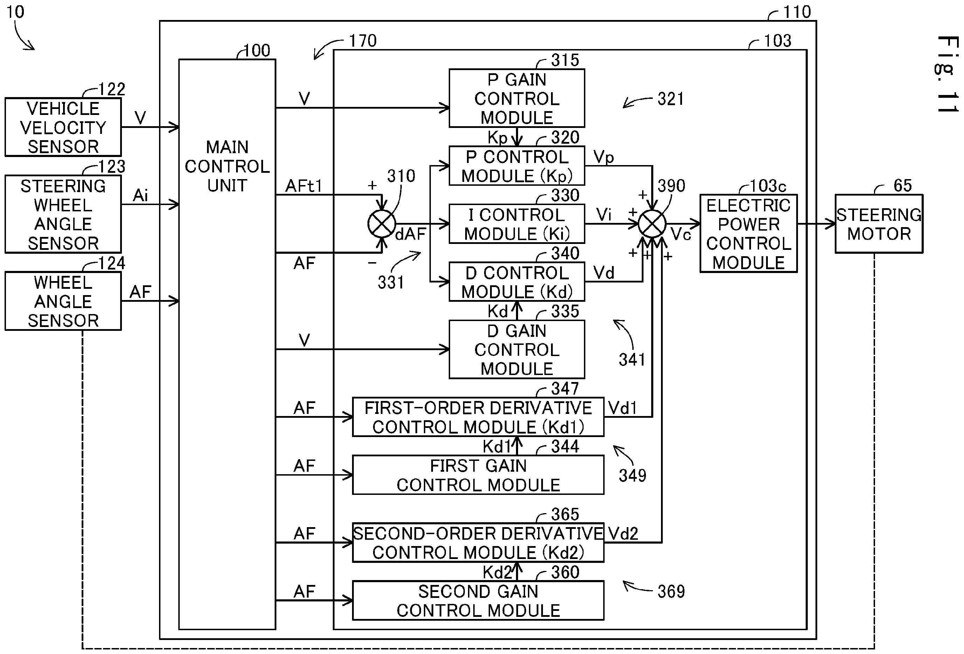

In S140, the controller 110 performs a process of controlling the front wheel support device 41. Fig. 11 is a block diagram showing a portion of the controller 110 which is related to the control of the front wheel support device 41 (specifically, steering motor 65). In this embodiment, the controller 110 performs a feedback control of the steering motor 65 which uses a difference dAF between the wheel angle AF and a target wheel angle AFt1 (described later) so as to bring the wheel angle AF close to the target wheel angle AFt1. Specifically, a PID (Proportional Integral Derivative) control is performed. When the absolute value of the difference dAF is larger, this control causes the torque of the steering motor 65 to be increased, and thus the wheel angle AF to approach the target wheel angle AFT1. In this manner, the target wheel angle AFt1 indicates a target direction of the direction D12 of the front wheel 12F. The controller 110 also performs a control for suppressing a rapid change in the wheel angle AF as with a so-called steering damper.

In this manner, the main control unit 100 and the steering motor control unit 103 as a whole serve as a turn control unit (sometimes referred to as turn control unit 170) for controlling the torque of the steering motor 65. The reference number "180" in Fig. 1, Fig. 9 represents a turn wheel support unit 180 that supports the front wheel 12F. The turn wheel support unit 180 includes the front fork 17, which is an example supporting member for rotatably supporting the front wheel 12F, the bearing 65 for supporting the front fork 17 turnably to right and left, the steering motor 65 for applying to the front fork 17 a torque for turning the front fork 17 to right and left, the turn control unit 170 for controlling the torque of the steering motor 65, and the connection 50.

As shown in Fig. 11, the steering motor control unit 103 includes a first summing point 310, a P gain control module 315, a P control module 320, a I control module 330, a D gain control module 335, a D control module 340, a first gain control module 344, a first-order derivative control module 347, a second gain control module 360, a second-order derivative control module 365, a second summing point 390, and an electric power control module 103c. The processing modules 310, 315, 320, 330, 335, 340, 344, 347, 360, 365, 390 are implemented by the processor 103p of the steering motor control unit 103. In addition, the electric power control module 103c is implemented using an electric circuit (e.g. inverter circuit) which supplies the steering motor 65 with electric power from the battery 120. Hereinafter, a phrase "the steering motor control unit 103 performs a process as the processing modules 310, 315, 320, 330, 335, 340, 344, 347, 360, 365, 390, 103c" may also be expressed as a phrase "the processing modules 310, 315, 320, 330, 335, 340, 344, 347, 360, 365, 390, 103c perform a process."

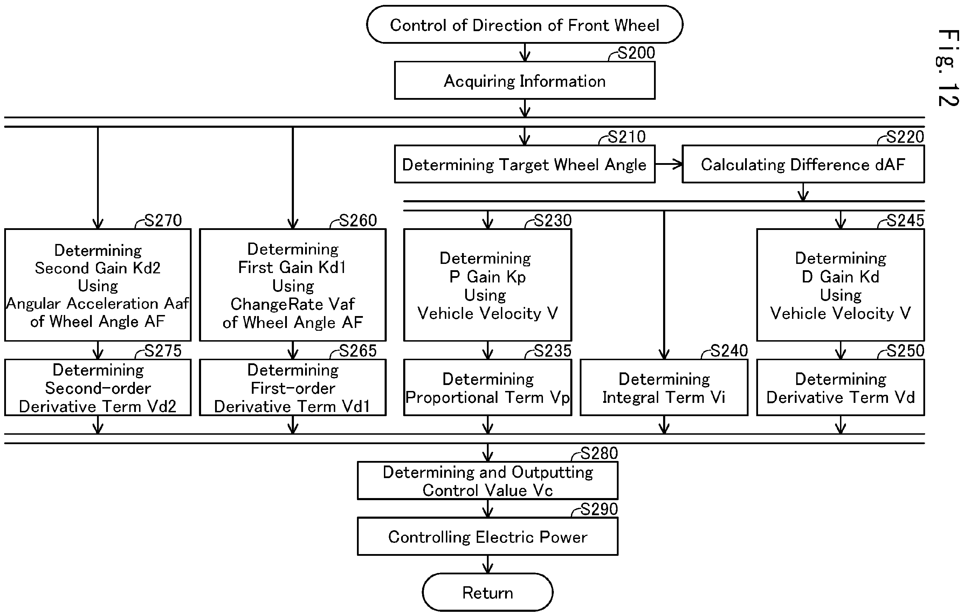

Fig. 12 is a flowchart showing an example process of controlling the steering motor 65. This process represents an example process of S140 in Fig. 10. In S200, the main control unit 100 acquires information indicative of the vehicle velocity V, information indicative of the steering wheel angle Ai, and information indicative of the wheel angle AF from the vehicle velocity sensor 122, the steering wheel angle sensor 123, and the wheel angle sensor 124, respectively. In S210, the main control unit 100 determines a first target wheel angle AFt1. The first target wheel angle AFt1 is determined based on the steering wheel angle Ai and the vehicle velocity V. Information which represents the correspondence between the first target wheel angle AFt1 and the steering wheel angle Ai and vehicle velocity V is predefined by the map data MAF stored in the non-volatile memory 100n of the main control unit 100 (Fig. 9). The main control unit 100 references this map data MAF to specify the first target wheel angle AFt1 corresponding to the combination of steering wheel angle Ai and vehicle velocity V according to the predetermined correspondence in the referenced data.

It should be noted that in this embodiment, the correspondence between the steering wheel angle Ai and vehicle velocity V and the first target wheel angle AFt1 is the same as that between the first target lean angle T1, which is specified using the steering wheel angle Ai in S130 of Fig. 10, and vehicle velocity V and the wheel angle AF, which is determined using the above Equations 6, 7. Accordingly, the same first target wheel angle AFt1 can be determined using the first target lean angle T1 and the vehicle velocity V. For example, the map data MAF may define the correspondence between the combination of first target lean angle T1 and vehicle velocity V and the first target wheel angle AFt1. Then, the main control unit 100 may use the first target lean angle T1 and the vehicle velocity V to determine the first target wheel angle AFt1.

In S220 (Fig. 12), the first summing point 310 of the steering motor control unit 103 (Fig. 11) acquires the information indicative of the first target wheel angle AFt1 and the information indicative of the wheel angle AF from the main control unit 100. Then, the first summing point 310 outputs information indicative of a difference dAF obtained by subtracting the wheel angle AF from the first target wheel angle AFt1, to the P control module 320, the I control module 330, and the D control module 340. Hereinafter, the difference dAF between the first target wheel angle AFt1 and the wheel angle AF may be referred to as wheel angle difference dAF.

In S230, the P gain control module 315 acquires the information indicative of the vehicle velocity V from the main control unit 100, and then uses the vehicle velocity V to determine a P gain Kp. In this embodiment, a correspondence between the vehicle velocity V and the P gain Kp is predetermined (described in detail later). In S235, the P control module 320 uses the wheel angle difference dAF and the P gain Kp to determine a proportional term Vp. The proportional term Vp may be determined by a well-known method for determining a proportional term of PID control. For example, a value obtained by multiplying the wheel angle difference dAF by the P gain Kp is output as the proportional term Vp.

In S240, the I control module 330 uses the wheel angle difference dAF and the I gain Ki to determine an integral term Vi. In this embodiment, the I gain Ki is predetermined. The integral term Vi may be determined by a well-known method for determining an integral term of PID control. For example, a value obtained by multiplying an integrated value of the wheel angle difference dAF by the I gain Ki is output as the integrated term Vi. The time width for integration of the wheel angle difference dAF may be predetermined, or may be determined based on another parameter (e.g. I gain Ki).

In S245, the D gain control module 335 acquires the information indicative of the vehicle velocity V from the main control unit 100, and then uses the vehicle velocity V to determine a D gain Kd. In this embodiment, a correspondence between the vehicle velocity V and the D gain Kd is predetermined (described in detail later). In S250, the D control module 340 uses the wheel angle difference dAF and the D gain Kd to determine a derivative term Vd. The derivative term Vd may be determined by a well-known method for determining a derivative term of PID control. For example, a value obtained by multiplying a derivative value of the wheel angle difference dAF by the D gain Kd is output as the derivative term Vd. The time difference for determining the derivative value of the wheel angle difference dAF may be predetermined, or may be determined based on another parameter (e.g. D gain Kd) instead.

It should be noted that the process for determining the proportional term Vp in S230, S235, the process for determining the integral term Vi in S240, and the process for determining the derivative term Vd in S245, S250 are performed in parallel.

In S260, the first gain control unit 344 acquires the information indicative of the wheel angle AF from the main control unit 100, and then calculates a change rate Vaf of the wheel angle AF. The change rate Vaf of the wheel angle AF represents an angular velocity of right and left turn of the front wheel 12F (hereinafter, sometimes referred to as angular velocity Vaf). The change rate Vaf may be calculated by a well-known method for calculating a change rate of parameter. For example, the first gain control module 344 may adopt as the change rate Vaf a difference obtained by subtracting the wheel angle AF at a past time point from that at the present time point. The time difference between the present time point and the past time point may be predetermined, or may be determined based on another parameter instead. The first gain control module 344 uses the change rate Vaf to determine a first gain Kd1. When the front wheel 12F comes into contact with a portion of the road which has a sudden change in height (such as bump or pit), the wheel angle AF can change rapidly. The direction of change in the wheel angle AF due to the non-flat portion of the road can be left or right. And, a magnitude of the change rate Vaf can become large to an extent that cannot usually occur when the wheel angle AF changes according to the handling of the steering wheel 41a. As described in detail later, when the magnitude of change rate Vaf is excessively large (e.g. the magnitude of the change rate Vaf exceeds a criterion), the first gain Kd1 is set to a larger value. On the other hand, when the magnitude of change rate Vaf is within a range of appropriately small change rate (e.g. the magnitude of the change rate Vaf does not exceed the criterion), the first gain Kd1 is set to a smaller value. In this embodiment, a correspondence between the change rate Vaf and the first gain Kd1 is predetermined.

In S265, the first-order derivative control module 347 uses the wheel angle AF and the first gain Kd1 to determine a first-order derivative term Vd1. The first-order derivative term Vd1 may be determined by a well-known method for determining a derivative term of PID control. For example, a value obtained by multiplying a derivative value of the wheel angle AF by the first gain Kd1 is output as the first-order derivative term Vd1. The time difference for determining the derivative value of the wheel angle AF may be predetermined, or may be determined based on another parameter (e.g. the first gain Kd1) instead.

In S270, the second gain control unit 360 acquires the information indicative of the wheel angle AF from the main control unit 100, and then calculates an angular acceleration Aaf of the wheel angle AF. The angular acceleration Aaf may be calculated by a well-known method for calculating an acceleration of change in parameter. For example, the second gain control module 360 may adopt as the angular acceleration Aaf a difference obtained by subtracting the angular velocity Vaf at a past time point from that at the present time point. The time difference between the present time point and the past time point may be predetermined, or may be determined based on another parameter instead. The method of calculating the angular velocity Vaf may be the same method as in S260. The second gain control module 360 uses the angular acceleration Aaf to determine a second gain Kd2. Similarly to the first gain Kd1 (S260), when the magnitude of angular acceleration Aaf is excessively large (e.g. the magnitude of the angular acceleration Aaf exceeds a criterion), the second gain Kd2 is set to a larger value. On the other hand, when the magnitude of angular acceleration Aaf is within a range of appropriately small angular acceleration (e.g. the magnitude of the angular acceleration Aaf does not exceed the criterion), the second gain Kd2 is set to a smaller value. In this embodiment, a correspondence between the angular acceleration Aaf and the second gain Kd2 is predetermined.

In S275, the second-order derivative control module 365 uses the wheel angle AF and the second gain Kd2 to determine a second-order derivative term Vd2. The method of determining the second-order derivative term Vd2 may be a method obtained by modifying a well-known method for determining a derivative term of PID control so as to use the second-order derivative of the wheel angle AF instead of the first-order derivative of the wheel angle AF. For example, a value obtained by multiplying a second-order derivative value of the wheel angle AF by the second gain Kd2 is output as the second-order derivative term Vd2. The second-order derivative value of the wheel angle AF may be determined in a similar manner to the derivative value in the method for determining a derivative term of PID control. For example, a difference obtained by subtracting the derivative value of the wheel angle AF at a past time point from that at the present time point may adopted as the second-order derivative value. The time difference for determining the second-order derivative value may be predetermined, or may be determined based on another parameter (e.g. the second gain Kd2) instead.

It should be noted that the process for the PID control in S210-S250, the process for the first-order derivative term Vd1 in S260, S265, and the process for the second-order derivative term Vd2 in S270, S275 are performed in parallel.

In S280, the second summing point 390 acquires information indicative of the terms Vp, Vi, Vd, Vd1, Vd2 from the control modules 320, 330, 340, 347, 365, respectively. Then, the second summing point 390 determines an actuation control value Vc which is a sum of these terms Vp, Vi, Vd, Vd1, Vd2 and then outputs information indicative of the actuation control value Vc to the electric power control module 103c. In S290, the electric power control module 103c controls the electric power to be supplied to the steering motor 65 according to the control value Vc. The magnitude of power (i.e. the magnitude of torque of the steering motor 65) is increased with an increase in the absolute value of the control value Vc.

As described later, when the wheel angle AF changes moderately (that is, the magnitudes of the angular velocity Vaf and the angular acceleration Aaf are smaller), the first gain Kd1 and the second gain Kd2 are smaller, and thus the first-order derivative term Vd1 and the second-order derivative term Vd2 are close to zero. In this case, the control value Vc is approximately equal to a sum of the terms Vp, Vi, Vd determined using the wheel angle difference dAF. And, the direction of the torque of the steering motor 65 to occur based on the control value Vc is a direction that causes the wheel angle AF to approach the first target wheel angle AFt1.

When the wheel angle AF changes rapidly, the magnitude of the change rate Vaf can be excessively large. In this case, the first gain Kd1 is larger as described later, and thus the magnitude of the first-order derivative term Vd1 is also larger. In this embodiment, the first gain Kd1 can be set so that the magnitude of the first-order derivative term Vd1 is sufficiently larger than those of the other terms Vp, Vi, Vd. And, the control value Vc can be approximately equal to the first-order derivative term Vd1. In this case, the direction of the torque of the steering motor 65 to occur based on the control value Vc is a direction that makes the magnitude of the derivative of the wheel angle AF, i.e. the magnitude of the change rate Vaf, smaller. Such a torque of the steering motor 65 suppresses a rapid change in the steering angle as with a so-called steering damper.

When the wheel angle AF changes rapidly, the magnitude of the angular acceleration Aaf can be also excessively large in addition to the magnitude of the change rate Vaf. In this case, the second gain Kd2 is larger as described later, and thus the magnitude of the second-order derivative term Vd2 is also larger. The direction of the torque of the steering motor 65 indicated by the second-order derivative term Vd2 is a direction that makes the magnitude of the second-order derivative of the wheel angle AF, i.e. the magnitude of the angular acceleration Aaf (specifically, the absolute value of the angular acceleration Aaf), smaller. When the magnitude of the angular acceleration Aaf becomes smaller, the change in the angular velocity Vaf is suppressed. In this manner, the second-order derivative term Vd2 suppresses the change in the angular velocity Vaf. When the wheel angle AF begins to change rapidly due to irregularities of the road etc., the magnitude of the angular velocity Vaf increases rapidly. The second-order derivative term Vd2 can cause the steering motor 65 to output a torque that suppresses the rapid increase in the magnitude of the angular velocity Vaf. Such a torque suppresses the rapid increase in the angular velocity Vaf and thus the rapid change in the wheel angle AF.

In this manner, the control value Vc indicates a torque of the steering motor 65. The control value Vc indicates, for example, direction and magnitude of electric current to be supplied to the steering motor 65. In S280, the steering motor control unit 103 (more specifically, the second summing point 390) may be considered to determine the torque of the steering motor 65. In addition, each term Vp, Vi, Vd, Vd1, Vd2 constitutes a part of the actuation control value Vc. Therefore, each term Vp, Vi, Vd, Vd1, Vd2 may be also considered to be a kind of control value for controlling the torque of the steering motor 65.

Then, the process of Fig. 12, i.e. S140 of of Fig. 10, ends. The controller 110 repeatedly performs the process of Fig. 10. If the condition for performing S130, S140 is met (S110: No), the controller 110 continues to perform the control of the lean angle T in S130 and the control of the wheel angle AF in S140. As a result, the vehicle 10 runs toward a traveling direction appropriate to the steering wheel angle Ai.

Fig. 13(A) is a graph showing a predetermined correspondence between the vehicle velocity V and the P gain Kp. The horizontal axis represents the vehicle velocity V, and the vertical axis represents the P gain Kp. As shown, within a first range RV1, which is a range of the vehicle velocity V not higher than a predetermined reference velocity Vth, the P gain Kp changes approximately linearly from a predetermined gain Kpm (Kpm>0) to a near-zero value as the vehicle velocity V changes from zero to the reference velocity Vth. And, the P gain Kp changes smoothly as the vehicle velocity V changes. Within a second range RV2, which is a range of the vehicle velocity V higher than the reference velocity Vth, (which is, in this embodiment, a range higher than the reference velocity Vth and not higher than a predetermined maximum velocity Vm of the vehicle 10), the P gain Kp decreases moderately as the vehicle velocity V increases. Within the second range RV2, the P gain Kp is approximately equal to zero. However, the P gain Kp is larger than zero. Moreover, within the second range RV2, the ratio of the change in P gain Kp to the change in vehicle velocity V is smaller as compared to that within the first range RV1. In this manner, the higher the vehicle velocity V is, the smaller the P gain Kp is. Moreover, within the second range RV2, the P gain Kp is close to zero irrespective of the vehicle velocity V. On the other hand, within the first range RV1, the P gain Kp can have a significantly larger value than the P gain Kp within the second range RV2.

In S230 of Fig. 12, the P gain control module 315 determines the P gain Kp to be the P gain Kp mapped to the vehicle velocity V based on such a correspondence. The correspondence between the velocity V and the P gain Kp is predefined by the map data Mp stored in advance in the non-volatile memory 103n (Fig. 9). The P gain control module 315 references the map data Mp to specify the P gain Kp mapped to the vehicle velocity V.

Fig. 13(B) is a graph showing a predetermined correspondence between the vehicle velocity V and the D gain Kd. The horizontal axis represents the vehicle velocity V, and the vertical axis represents the D gain Kd. As shown, the D gain Kd changes with the vehicle velocity V similarly to the P gain Kp (Fig. 13(A)). Specifically, within the first range RV1 not higher than the reference velocity Vth, the D gain Kd changes approximately linearly from a predetermined gain Kdm (Kdm>0) to a near-zero value as the vehicle velocity V changes from zero to the reference velocity Vth. Within the second range RV2 higher than the reference velocity Vth, the D gain Kd decreases moderately as the vehicle velocity V increases. Within the second range RV2, the D gain Kd is approximately equal to zero. However, the D gain Kd is larger than zero. In S245 of Fig. 12, the D gain control module 335 determines the D gain Kd to be a D gain Kd mapped to the vehicle velocity V by such a correspondence. The correspondence between the velocity V and the D gain Kd is predefined by the map data Md stored in advance in the non-volatile memory 103n (Fig. 9). The D gain control module 335 references the map data Md to specify the D gain Kd mapped to the vehicle velocity V.

Fig. 13(C) is a graph showing an example correspondence among the vehicle velocity V, the magnitude dAFa of the wheel angle difference dAF, and the magnitude TQa of the torque of the steering motor 65. The horizontal axis represents the vehicle velocity V, and the vertical axis represents the magnitude dAFa of the wheel angle difference dAF. The magnitude dAFa of the wheel angle difference dAF indicates the absolute value of the wheel angle difference dAF (hereinafter, sometimes referred to as angle difference magnitude dAFa). A maximum value dAFam represents a maximum value that the angle difference magnitude dAFa can take. The magnitude TQa of the torque indicates the absolute value of the torque (hereinafter, sometimes referred to as torque magnitude TQa). The graph of Fig. 13(C) is a graph when the first gain Kd1 (Fig. 12: S260) and the second gain Kd2 (S270) are sufficiently small (that is, the first-order derivative term Vd1 (S260) and the second-order derivative term Vd2 (S275) are sufficiently small).

As described with regard to S280, S290 in Fig. 12, the larger the absolute value of the control value Vc is, the larger the torque magnitude TQa is. When the first gain Kd1 and the second gain Kd2 are smaller, the larger the absolute value of the sum of the terms Vp, Vi, Vd is, the larger the absolute value of the control value Vc is. In this embodiment, the I gain Ki is smaller. During the vehicle 10 moving, the absolute values of the proportional term Vp and the derivative term Vd can each exceed the absolute value of integral term Vi and have an even larger value. And, the torque magnitude TQa principally depends upon the proportional term Vp and the derivative term Vd.

In the graph of Fig. 13(C), regions representing combinations of vehicle velocity V and angle difference magnitude dAFa are labeled as five regions A1-A5. In these five regions A1-A5, the torque magnitude TQa is divided into five steps. The regions A1-A5 are arranged in ascending order of the torque magnitude TQa. Each boundary line L1-L4 of two adjacent regions has a shape that indicates that as the vehicle velocity V increases from zero, the angle difference magnitude dAFa also increases from zero. In practice, the torque magnitude TQa changes smoothly as at least one of the vehicle velocity V or the angle difference magnitude dAFa change. Although not illustrated, when at least one of the vehicle velocity V or the angle difference magnitude dAFa change within one region, the torque magnitude TQa also changes.

As shown, for any angle difference magnitude dAFa, the torque magnitude TQa decreases with an increase in the vehicle velocity V. For example, in the case of the angle difference magnitude dAFa being a first magnitude dAFax, as the vehicle velocity V increases from zero, the corresponding region changes in the order of A5 to A1. The decrease in the torque magnitude TQa with the increase in the vehicle velocity V corresponds the decrease in the P gain Kp (Fig. 13(A)) and the decrease in the D gain Kd (Fig. 13(B)) with the increase in the vehicle velocity V.

In particular, as shown in Fig. 13(A), Fig. 13(B), unlike within the first range RV1 where the vehicle velocity V does not exceed the reference velocity Vth, the P gain Kp and the D gain Kd are close to zero within the second range RV2 where the vehicle velocity V exceeds the reference velocity Vth. Therefore, under the condition that the angle difference magnitude dAFa is constant, when the vehicle velocity V exceeds the reference velocity Vth, the torque magnitude TQa is significantly smaller as compared to when the vehicle velocity V does not exceed the reference velocity Vth. For example, as shown in Fig. 13(C), the regions A1, A2 corresponding to the smaller torque magnitude TQa expand further into the area of larger angle difference magnitude dAFa within the second range RV2 as compared to the first range RV1. In addition, the slopes of the boundary lines L1-L4 that separate the regions A1-A5 (i.e. the ratio of the change in the angle difference magnitude dAFa to the change in the vehicle velocity V) in Fig. 13(C) is significant larger within the second range RV2 as compared within the first range RV1. In particular, the slopes of the boundary lines L3, L4 separating the regions A3, A4, A5 corresponding to the larger torque magnitude TQa are significantly larger within the second range RV2 as compared within the first range RV1.

In addition, for any vehicle velocity V, the torque magnitude TQa increases with an increase in the angle difference magnitude dAFa. For example, in the case of the vehicle velocity V being a first vehicle velocity Vx, as the angle difference magnitude dAFa increases from zero, the corresponding region changes in the order of A1 to A5. The increase in the torque magnitude TQa with the increase in the angle difference magnitude dAFa corresponds to the increase in the magnitude of the proportional term Vp (i.e. The absolute value of the proportional term Vp) with the increase in the angle difference magnitude dAFa (Fig. 12: S235).

When the steering motor 65 outputs a torque having such a torque magnitude TQa, the vehicle 10 is controlled as follows. When the vehicle velocity V exceeds the reference velocity Vth, the torque magnitude TQa of the steering motor 65 is smaller, and therefore the front wheel 12F is allowed to turn freely independently of the steering wheel angle. For example, the torque magnitude TQa within the two regions A1, A2 of Fig. 13(C) allows the front wheel 12F to turn freely independently of the steering wheel angle. The reason for setting the P gain Kp and the D gain Kd so that the torque magnitude TQa becomes smaller when the vehicle velocity V is higher as described above is as follows.

When the vehicle velocity V is higher, due to a variety of factors, the orientation of the front wheel 12F can change readily following a lean of the vehicle body 90. For example, as described with reference to Fig. 8, due to the angular momentum of the rotating front wheel 12F, the direction of the front wheel 12F changes following a lean of the vehicle body 90. Accordingly, the larger angular momentum of the front wheel 12F, i.e. the higher vehicle velocity V, allows the orientation of the front wheel 12F to change more readily following a lean of the vehicle body 90. In this embodiment, when the vehicle velocity V exceeds the reference velocity Vth, the torque magnitude TQa of the steering motor 65 is smaller, and therefore the direction of the front wheel 12F is allowed to turn to right and left independently of the operation amount of the steering wheel 41a. In this case, the front wheel 12F spontaneously turns to a direction of the wheel angle AF specified based on the turning radius R expressed in Equation 6, and Equation 7. The front wheel 12F begins to spontaneously turn after beginning of change in the lean angle T. That is, the wheel angle AF changes following a lean of the vehicle body 90. In this manner, the driving stability is improved because the wheel angle AF comes close to an angle appropriate for the lean angle T. It should be noted that the reference velocity Vth is determined experimentally in advance so that the direction D12 of the front wheel 12F can become a direction appropriate for the lean angle T in S140 of Fig. 10 (e.g. the reference velocity Vth is determined to be 20km/hour).

When the angle difference magnitude dAFa is larger, the torque magnitude TQa is also larger even if the vehicle velocity V exceeds the reference velocity Vth. As a result, when the angle difference magnitude dAFa is larger, the torque of the steering motor 65 suppresses free turning of the front wheel 12F, and controls the direction D12 of the front wheel 12F to approach a target direction (in this case, a direction corresponding to the target wheel angle AFt1). For example, when the vehicle 10 runs on a snowy road or flooded road, the direction D12 of the front wheel 12F is difficult to change due to resistance of snow or water. Accordingly, the angle difference magnitude dAFa can be larger. In addition, when the moving vehicle 10 is subject to a cross wind, the vehicle 10 moves downwind, and thereby the angle difference magnitude dAFa can be larger. In this situation, the torque of the steering motor 65 controls the direction D12 of the front wheel 12F to approach a target direction. For example, the torque magnitude TQa within the three regions A3, A4, A5 of Fig. 13(C) controls the direction D12 of the front wheel 12F to approach the target direction. As a result, the driving stability is improved because the wheel angle AF comes close to the first target wheel angle AFt1 appropriate for the lean angle T.

When the vehicle velocity V does not exceed the reference velocity Vth, the torque magnitude TQa of the steering motor 65 is larger. In addition, the torque of the steering motor 65 is set to a torque that causes the direction D12 of the front wheel 12F to approach a target direction (in this case, a direction corresponding to the target wheel angle AFt1). This causes the wheel angle AF to approach the target wheel angle AFt1, and the direction of the front wheel 12F to approach the target direction. As a result, the driving stability is improved because deviation of the direction D12 of the front wheel 12F from the direction appropriate for the operation amount of the steering wheel 41a is suppressed.

In addition, when the vehicle velocity V does not exceed the reference velocity Vth, the higher the vehicle velocity V is, the smaller the torque magnitude TQa is. As such, the driving stability is improved because a rapid change in the torque magnitude TQa is suppressed when the vehicle velocity V changes between the first range RV1 and the second range RV2. When the vehicle velocity V is lower, the torque magnitude TQa is larger, and therefore the torque of the steering motor 65 controls the direction D12 of the front wheel 12F to approach a target direction (in this case, a direction corresponding to the target wheel angle AFt1). As a result, the driving stability is improved because the wheel angle AF comes close to the first target wheel angle AFt1 appropriate for the lean angle T.

Fig. 13(D) is a graph showing a predetermined correspondence between the magnitude Vafa of the change rate Vaf of the wheel angle AF and the first gain Kd1. The horizontal axis represents the magnitude Vafa of the change rate Vaf, and the vertical axis represents the first gain Kd1. The magnitude Vafa of the change rate Vaf represents the absolute value of the change rate Vaf (i.e. the angular velocity Vaf) (hereinafter, sometimes referred to as angular velocity magnitude Vafa). As shown, within a first range RVa1, which is a range of the angular velocity magnitude Vafa not higher than a predetermined reference change rate Vaft, the first gain Kd1 is maintained at a relatively smaller gain (Kd1>0). As the angular velocity magnitude Vafa changes from a value smaller than the reference change rate Vaft to a value larger than the reference change rate Vaft, the first gain Kd1 increases significantly relative to the increase in the angular velocity magnitude Vafa. And, within a second range RVa2, which is a range of the angular velocity magnitude Vafa higher than the reference change rate Vaft, the first gain Kd1 is maintained at a relatively larger gain. In S260 of Fig. 12, the first gain control module 344 determines the first gain Kd1 to be a gain Kd1 mapped to the change rate Vaf by such a correspondence. The correspondence between the change rate Vaf (in this case, the magnitude Vafa) and the first gain Kd1 is predefined by the map data Md1 stored in advance in the non-volatile memory 103n (Fig. 9). The first gain control module 344 references the map data Md1 to specify the first gain Kd1 mapped to the change rate Vaf.

Fig. 13(E) is a graph showing an example correspondence between the magnitude Vafa of the angular velocity Vaf of the wheel angle AF and the torque magnitude TQ1. The horizontal axis represents the angular velocity magnitude Vafa, and the vertical axis represents the torque magnitude TQ1. This torque magnitude TQ1 represents a magnitude of torque of the steering motor 65 indicated by the first-order derivative term Vd1. In a situation where the wheel angle AF is the same as the target wheel angle AFt1 (i.e. the wheel angle difference dAF is equal to zero), the terms Vp, Vi, Vd by the PID control are approximately equal to zero, and therefore the magnitude of the torque of the steering motor 65 can be approximately equal to the torque magnitude TQ1.

As shown, when the angular velocity magnitude Vafa is in the first range RVa1 not higher than the reference change rate Vaft, the torque magnitude TQ1 has a relatively smaller value. As described with reference to Fig. 13(D), within this first range RVa1, the first gain Kd1 is maintained at a smaller value, and therefore the torque magnitude TQ1 increases moderately relative to the increase in the angular velocity magnitude Vafa.

As the angular velocity magnitude Vafa changes from a value smaller than the reference change rate Vaft to a value larger than the reference change rate Vaft, the torque magnitude TQ1 increases significantly relative to the increase in the angular velocity magnitude Vafa. Such a change in the torque magnitude TQ1 corresponds to the increase of the first gain Kd1 (Fig. 13(D)) relative to the increase of the angular velocity magnitude Vafa. And, when the angular velocity magnitude Vafa is in the second range RVa2 higher than the reference change rate Vaft, the torque magnitude TQ1 increases as the angular velocity magnitude Vafa increases.

In this manner, the torque magnitude TQ1 is larger when the angular velocity magnitude Vafa is larger. Accordingly, when the moving direction D12 of the front wheel 12F begins to change unintentionally and rapidly due to irregularities of the road etc., the steering motor 65 can use its larger torque to suppress the rapid change in the direction D12 of the front wheel 12F. In particular, the first gain control module 344 (Fig. 11) and the first-order derivative control module 347 performs the control by using the wheel angle AF rather than the wheel angle difference dAF. Accordingly, the first-order derivative term Vd1 determined by the first-order derivative control module 347 can suppress a rapid change in the wheel angle AF as with a so-called steering damper, irrespective of the difference (i.e. the wheel angle difference dAF) between the target wheel angle AFt1 and the wheel angle AF. This results in improved driving stability of the vehicle 10. In addition, it is possible to omit the steering damper from the vehicle 10.

For example, when the vehicle 10 is traveling on a flat road, in response to the steering wheel 41a being rotated to left, the direction D12 of the front wheel 12F turns to left. While the direction D12 of the front wheel 12F is making a leftward turn, the direction D12 of the front wheel 12F can turn to left rapidly if the front wheel 12F comes into contact with a bump on the road. In this case, the change rate Vaf of the wheel angle AF represents a large change rate to the left direction. The direction of the torque of the steering motor 65 to occur based on the first-order derivative term Vd1 of the first-order derivative control module 347 is a direction that makes the magnitude of the change rate Vaf smaller (in this case, which is the right direction). Due to such a torque, the direction D12 of the front wheel 12F is suppressed from turning to left rapidly. For example, the direction D12 of the front wheel 12F is suppressed from turning to left further away from a target direction (in this case, a direction corresponding to the target wheel angle AFt1).

It should be noted that the direction D12 of the front wheel 12F can turn to right rapidly due to a bump. In this case, the direction of the torque of the steering motor 65 to occur based on the first-order derivative term Vd1 is the left direction. Due to such a torque, the direction D12 of the front wheel 12F is suppressed from turning to right rapidly.

After the front wheel 12F passes over the bump on the road, the magnitude Vafa of the change rate Vaf of the wheel angle AF returns again to a smaller value. As a result, the first gain Kd1 (Fig. 13(D)) is set to a smaller value. Then, through the PID control by the control modules 320, 330, 340 (Fig. 11), the torque of the steering motor 65 is controlled so that the wheel angle AF approaches the target wheel angle AFt1.

It should be noted that the reference change rate Vaft is set to a larger value than any value that the angular velocity magnitude Vafa can take due to the normal operation of the steering wheel 41a by the user. Such a reference change rate Vaft may be determined experimentally.

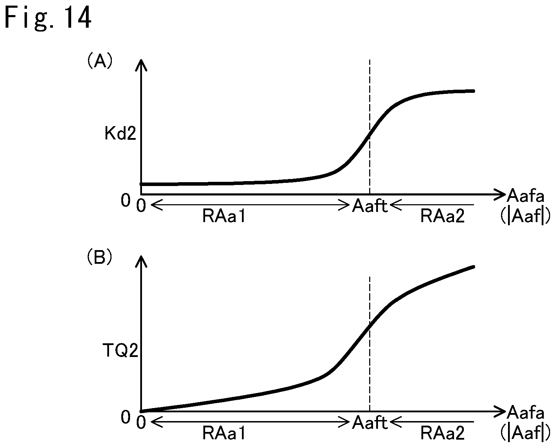

Fig. 14(A) is a graph showing a predetermined correspondence between the magnitude Aafa of the angular acceleration Aaf of the wheel angle AF and the second gain Kd2. The horizontal axis represents the magnitude Aafa of the angular acceleration Aaf, and the vertical axis represents the second gain Kd2. The magnitude Aafa of the angular acceleration Aaf indicates the absolute value of the angular acceleration Aaf (hereinafter, sometimes referred to as angular acceleration magnitude Aafa). As shown, within a first range RAa1, which is a range of the angular acceleration magnitude Aafa not higher than a predetermined reference angular acceleration Aaft, the second gain Kd2 is maintained at a relatively smaller gain (Kd2>0). As the angular acceleration magnitude Aafa changes from a value smaller than the reference angular acceleration Aaft to a value larger than the reference angular acceleration Aaft, the second gain Kd2 increases significantly relative to the increase in the angular acceleration magnitude Aafa. And, within a second range RAa2, which is a range of the angular acceleration magnitude Aafa higher than the reference angular acceleration Aaft, the second gain Kd2 is maintained at a relatively larger gain. In S270 of Fig. 12, the second gain control module 360 determines the second gain Kd2 to be a gain Kd2 mapped to the angular acceleration Aaf by such a correspondence. The correspondence between the angular acceleration Aaf (in this case, the magnitude Aafa) and the second gain Kd2 is predefined by the map data Md2 stored in advance in the non-volatile memory 103n (Fig. 9). The second gain control module 360 references the map data Md2 to specify the second gain Kd2 mapped to the angular acceleration Aaf.

Fig. 14(B) is a graph showing an example correspondence between the magnitude Aafa of the angular acceleration Aaf of the wheel angle AF and the torque magnitude TQ2. The horizontal axis represents the angular acceleration magnitude Aafa, and the vertical axis represents the torque magnitude TQ2. This torque magnitude TQ2 represents a magnitude of torque of the steering motor 65 indicated by the second-order derivative term Vd2.

As shown, when the angular acceleration magnitude Aafa is in the first range RAa1 not higher than the reference angular acceleration Aaft, the torque magnitude TQ2 has a relatively smaller value. As described with reference to Fig. 14(A), within this first range RAa1, the second gain Kd2 is maintained at a smaller value, and therefore the torque magnitude TQ2 increases moderately relative to the increase in the angular acceleration magnitude Aafa.

As the angular acceleration magnitude Aafa changes from a value smaller than the reference angular acceleration Aaft to a value larger than the reference angular acceleration Aaft, the torque magnitude TQ2 increases significantly relative to the increase in the angular acceleration magnitude Aafa. Such a change in the torque magnitude TQ2 corresponds to the increase of the second gain Kd2 (Fig. 14(A)) relative to the increase of the angular acceleration magnitude Aafa. And, when the angular acceleration magnitude Aafa is in the second range RAa2 higher than the reference angular acceleration Aaft, the torque magnitude TQ2 increases as the angular acceleration magnitude Aafa increases.

In this manner, the torque magnitude TQ2 is larger when the angular acceleration magnitude Aafa is larger. Accordingly, when the moving direction D12 of the front wheel 12F begins to change unintentionally and rapidly due to irregularities of the road etc., the steering motor 65 can use its larger torque to suppress the rapid change in the direction D12 of the front wheel 12F. In particular, the second gain control module 360 (Fig. 11) and the second-order derivative control module 365 performs the control by using the wheel angle AF rather than the wheel angle difference dAF. Accordingly, the second-order derivative term Vd2 can suppress a rapid change in the wheel angle AF as with a so-called steering damper, irrespective of the wheel angle difference dAF, similarly to the first-order derivative term Vd1.

In addition, when the wheel angle AF changes rapidly, the angular acceleration magnitude Aafa can become larger before the angular velocity magnitude Vafa becomes larger. That is, the angular acceleration magnitude Aafa can exceed the reference angular acceleration Aaft at the stage of the wheel angle AF having begun to change. Accordingly, the second gain Kd2 and thus the second-order derivative term Vd2 can have a larger value at the stage of the wheel angle AF having begun to change. Thereby, the steering motor 65 can output the torque corresponding to the second-order derivative term Vd2 to suppress the change in the wheel angle AF at the stage of the wheel angle AF having begun to change.

In addition, the angular acceleration magnitude Aafa can also become larger when the angular velocity magnitude Vafa becomes smaller. For example, when the angular velocity magnitude Vafa decreases due to the torque corresponding to the first-order derivative term Vd1, the angular acceleration magnitude Aafa can increase. With such an increase in the angular acceleration magnitude Aafa, the second-order derivative term Vd2 increases. In this case, the direction of the toque corresponding to the second-order derivative term Vd2 is a direction that suppresses the decrease in the angular velocity magnitude Vafa. In this manner, the second-order derivative term Vd2 can suppress the rapid change in the wheel angle AF due to the first-order derivative term Vd1.

If the change in the wheel angle AF is smaller, the angular velocity Vaf and the angular acceleration Aaf are smaller. This makes the first-order derivative term Vd1 and the second-order derivative term Vd2 smaller. In this situation, the control value Vc is approximately equal to a sum of the terms Vp, Vi, Vd for causing the wheel angle AF to approach the target wheel angle AFt1. And, the torque of the steering motor 65 is controlled to cause the direction of the front wheel 12F to approach the target direction.

In S110 of Fig. 10, if a condition is met (S110: Yes) that 'the driving mode is either "reverse" or "parking," the controller 110 performs the processes in S170, S180.

The process of S170 is the same as that of S130. The main control unit 100 specifies a first target lean angle T1 mapped to the steering wheel angle. The main control unit 100 supplies the lean motor control unit 102 with an instruction for controlling the lean motor 25 so that the lean angle T is equal to the first target lean angle T1. According to the instruction, the lean motor control unit 102 drives the lean motor 25 so that the lean angle T is equal to the first target lean angle T1. This causes the lean angle T to be controlled to the first target lean angle T1.

The process of S180 is the same as that of S140 except that the P gain Kp is set to a predetermined value. In S180, the process of Fig. 12 that is modified as follows is performed. Specifically, in S230, the P gain control module 315 (Fig. 11) sets a predetermined P gain as the P gain Kp. This P gain Kp has a magnitude sufficient to prevent the front wheel 12F from turning freely independently of the steering wheel angle, and to allow the steering motor 65 to control the direction D12 of the front wheel 12F. For example, the P gain Kp is set to the gain Kpm of Fig. 13(A). The other steps in Fig. 12 are not modified, and are the same as the corresponding steps in S140 of Fig. 10. As such, in S180, the torque of the steering motor 65 is set to a torque that causes the direction D12 of the front wheel 12F to approach a target direction (in this case, a direction corresponding to the target wheel angle AFt1). The wheel angle AF approaches the target wheel angle AFt1, and the direction of the front wheel 12F approaches the target direction. As a result, the driving stability is improved because deviation of the direction D12 of the front wheel 12F from the direction appropriate for the operation amount of the steering wheel 41a is suppressed. It should be noted that the control of the wheel angle AF in S180 may be any of a variety of other controls. For example, the P gain Kp may be determined as in S140.

In response to S170, S180 being performed, the process of Fig. 10 ends. The controller 110 repeatedly performs the process of Fig. 10. If the condition for performing S170, S180 is met (S110: Yes), the controller 110 continues to perform the control of the lean angle T in S170 and the control of the wheel angle AF in S180. As a result, the vehicle 10 runs toward a traveling direction appropriate to the steering wheel angle Ai.

The main control unit 100 (Fig. 9) and the drive device control unit 101 serve as a drive control unit for controlling the electric motors 51L, 51R according to the accelerator operation amount and brake operation amount although not illustrated. In this embodiment, specifically, the main control unit 100 supplies the drive device control unit 101 with an instruction for increasing output power of the electric motors 51L, 51R when the accelerator operation amount is increased. According to the instruction, the drive device control unit 101 controls the electric motors 51L, 51R so as to increase their output power. The main control unit 100 supplies the drive device control unit 101 with an instruction for decreasing output power of the electric motors 51L, 51R when the accelerator operation amount is decreased. According to the instruction, the drive device control unit 101 controls the electric motors 51L, 51R so as to decrease their output power.

The main control unit 100 supplies the drive device control unit 101 with an instruction for decreasing output power of the electric motors 51L, 51R when the brake operation amount becomes larger than zero. According to the instruction, the drive device control unit 101 controls the electric motors 51L, 51R so as to decrease their output power. It should be noted that the vehicle 10 preferably has a brake device which frictionally reduces rotational rate of at least one of all the wheels 12F, 12L, 12R. In addition, the brake device preferably reduces the rotational rate of the at least one wheel when the user steps on the brake pedal 46.

As described above, in this embodiment, if the determination result in S110 of Fig. 10 is "No," then the controller 110 adjusts the P gain Kp according to the vehicle velocity V (S140). The determination result of "No" in S110 usually indicates that the vehicle 10 is moving forward.

In S210 of Fig. 12, the main control unit 100 of the turn control unit 170 (Fig. 11) uses a control parameter, which includes at least one of the steering wheel angle Ai or first target lean angle T1, and the vehicle velocity V, to determine the target direction (i.e. the first target wheel angle AFt1) of the front wheel 12F. In S230, the P gain control module 315 determines the P gain Kp, and in S235, the P control module uses the P gain Kp to determine the proportional term Vp. The P gain control module 315 and the P control module 320 as a whole correspond to a determination module for determining the proportional term Vp (sometimes referred to as proportional term determination module 321). In S240, the I control module 330 determines the integral term Vi. The I control module 330 corresponds to a determination module for determining the integral term Vi (sometimes referred to as integral term determination module 331). In S245, the D gain control module 335 determines the D gain Kd, and in S250, the D control module 340 determines the derivative term Vd. The D gain control module 335 and the D control module 340 as a whole correspond to a determination module for determining the derivative term Vd (sometimes referred to as derivative term determination module 341). As described above, all of these terms Vp, Vi, Vd are terms for causing the direction D12 of the front wheel 12F to approach a target direction (in this case, a direction corresponding to the target wheel angle AFt1). In S280 of Fig. 12, the second summing point 390 uses the terms Vp, Vi, Vd to determine the actuation control value Vc for controlling the steering motor 65 (in this embodiment, the terms Vd1, Vd2 are used in addition to the terms Vp, Vi, Vd). Then, in S290, the electric power control module 103c controls the torque of the steering motor 65 by controlling the electric power to be supplied to the steering motor 65 according to the control value Vc. When the vehicle 10 is running in stable condition, the magnitude of the first-order derivative term Vd1 (S265) and the magnitude of the second-order derivative term Vd2 (S275) are smaller, and therefore the actuation control value Vc is approximately equal to a sum of the terms Vp, Vi, Vd. Accordingly, the direction of the torque of the steering motor 65 is set to a direction of torque that causes the direction of the front wheel 12F to approach the target direction. And, the P gain control module 315 uses the vehicle velocity V to adjust the P gain Kp, as described with reference to Fig. 13(A). That is, the proportional term determination module 321 uses the vehicle velocity V to adjust the proportional term Vp. This allows the turn control unit 170 to adjust the torque of the steering motor 65 to a torque appropriate for the vehicle velocity V, and therefore the driving stability of the vehicle can be improved.

In addition, as described with reference to Fig. 13(A), in S140 of Fig. 10 (specifically, S230 of Fig. 12), the P gain control module 315 of the proportional term determination module 321 (Fig. 11) sets the P gain Kp to a smaller value when the vehicle velocity V is higher, as compared to when the vehicle velocity V is lower. In S235 of Fig. 12, the P control module 320 of the proportional term determination module 321 uses the wheel angle difference dAF and the P gain Kp to determine the proportional term Vp. And usually, the larger the absolute value of the proportional term Vp is, the larger the torque magnitude TQa is. As such, the P gain Kp represents a ratio of the torque magnitude TQa of the steering motor 65 to the magnitude dAFa of the difference dAF between the wheel angle AF and the first target wheel angle AFt1 (i.e. the magnitude of the difference between the direction D12 of the front wheel 12F and the target direction). In this manner, the proportional term determination module 321 determines the proportional term Vp so that the ratio (i.e. The P gain Kp) of the magnitude TQa of the toque of the steering motor 65 indicated by the proportional term Vp to the magnitude dAFa of the wheel angle difference dAF is smaller when the vehicle velocity V is higher, as compared to when the vehicle velocity V is lower. When the vehicle velocity V is lower, the larger P gain Kp makes the absolute value of the proportional term Vp larger, and accordingly the torque of the steering motor 65 is increased. This allows the direction D12 of the front wheel 12F to appropriately approach the target direction. Alternatively, when the vehicle velocity V is higher, the smaller P gain Kp makes the absolute value of the proportional term Vp smaller, and accordingly the torque of the steering motor 65 is decreased. This allows the direction D12 of the front wheel 12F to change following a change in lean of the vehicle body 90. The above can enable driving stability of the vehicle to be improved. In addition, the higher vehicle velocity V allows the orientation of the front wheel 12F to change more readily following a lean of the vehicle body 90. Accordingly, if the P gain Kp is set to a smaller value as the vehicle velocity V becomes higher, good driving stability of the vehicle is maintained for a variety of vehicle velocities V.

In addition, as illustrated in Fig. 13(A), the P gain control module 315 of the proportional term determination module 321 varies the P gain Kp smoothly (i.e. continuously) across the entire vehicle velocity V. Accordingly, the torque of the steering motor 65 is suppressed from changing rapidly and significantly in response to change in the vehicle velocity V. This results in improved stability of the direction D12 of the front wheel 12F, and thus improved driving stability.

In addition, as described with reference to Fig. 11, Fig. 12, the P control module 320 of the proportional term determination module 321 uses the wheel angle difference dAF (i.e. the difference between the direction D12 of the front wheel 12F and the target direction) to determine the proportional term Vp thorough a feedback control. That is, the torque of the steering motor 65 is feedback-controlled. This allows the turn control unit 170 to appropriately set the torque of the steering motor 65 to a torque that causes the direction D12 of the front wheel 12F to approach the target direction. This can result in improved driving stability of the vehicle 10.

In addition, as described with reference to S235 of Fig. 12, the P control module 320 of the proportional term determination module 321 determines the proportional term Vp by multiplying the wheel angle difference dAF (i.e. the magnitude of the difference between the direction D12 of the front wheel 12F and the target direction) by the P gain Kp. When the angle difference magnitude dAFa, which is an absolute value of the wheel angle difference dAF, is larger, the absolute value of the proportional term Vp is larger as compared to when the angle difference magnitude dAFa is smaller. In addition, the absolute value of the actuation control value Vc indicates the torque magnitude TQa of the steering motor 65. The absolute value of the proportional term Vp included in the actuation control value Vc indicates a magnitude of component due to the proportional term Vp in the torque of the steering motor 65. Accordingly, the P control module 320 of the proportional term determination module 321 determines the proportional term Vp so that the magnitude of the toque of the steering motor 65 indicated by the proportional term Vp is larger when the angle difference magnitude dAFa is larger, as compared to when the angle difference magnitude dAFa is smaller. Such a proportional term Vp achieves the torque magnitude TQa as shown in Fig. 13(C). That is, when the angle difference magnitude dAFa (i.e. the difference between the direction D12 of the front wheel 12F and the target direction) is larger, the torque magnitude TQa of the steering motor 65 becomes larger as compared to when the angle difference magnitude dAFa is smaller. This allows the direction D12 of the front wheel 12F to appropriately approach the target direction, and therefore driving stability of the vehicle is improved.

In particular, in this embodiment, across the entire range of the vehicle velocity V higher than zero, the torque magnitude TQa is larger when the angle difference magnitude dAFa is larger, as compared to when the angle difference magnitude dAFa is smaller. And, when the angle difference magnitude dAFa is larger (in this case, when the combination of the angle difference magnitude dAFa and vehicle velocity V is within the three regions A3-A5 of Fig. 13(C)), the torque magnitude TQa suppresses free turning of the front wheel 12F, and causes the direction D12 of the front wheel 12F to approach the target direction. This allows the direction D12 of the front wheel 12F to appropriately approach the target direction when the angle difference magnitude dAFa is larger, and therefore driving stability of the vehicle is improved.

Moreover, in S260 of Fig. 12, the first gain control module 344 of the turn control unit 170 (Fig. 11) determines the first gain Kd1, and in S265, the first-order derivative control module 347 uses the first gain Kd1 to determine the first-order derivative term Vd1. In this manner, the first gain control module 344 and the first-order derivative control module 347 as a whole correspond to a determination module for determining the first-order derivative term Vd1 (sometimes referred to as first-order derivative term determination module 349). As described above, the first-order derivative term Vd1 is a term for making the angular velocity magnitude Vafa, which is a magnitude of the angular velocity Vaf of the direction D12 of the front wheel 12F, smaller. Then, in S280 of Fig. 12, the second summing point 390 uses the first-order derivative terms Vd1 to determine the actuation control value Vc for controlling the steering motor 65 (in this embodiment, the terms Vp, Vi, Vd, Vd2 are used in addition to the first-order derivative term Vd1). When the front wheel 12F contacts with a portion of the road which has a sudden change in height (such as bump or pit), and the angular velocity magnitude Vafa becomes larger, the first gain Kd1 becomes larger, and therefore the absolute value of the first-order derivative term Vd1 becomes larger. In particular, when the angular velocity magnitude Vafa of the direction D12 of the front wheel 12F is larger, the absolute value of the first-order derivative term Vd1 can be significantly larger than those of the other terms Vp, Vi, Vd, Vd2. In this case, the actuation control value Vc can be approximately equal to the first-order derivative term Vd1. And, the steering motor 65 outputs a torque having a direction that makes the magnitude Vafa of the change rate Vaf smaller. This suppresses a rapid, significant change in the direction D12 of the front wheel 12F, and therefore driving stability of the vehicle can be improved.

In S270 of Fig. 12, the second gain control module 360 of the turn control unit 170 (Fig. 11) determines the second gain Kd2, and in S275, the second-order derivative control module 365 uses the second gain Kd2 to determine the second-order derivative term Vd2. In this manner, the second gain control module 360 and the second-order derivative control module 365 as a whole correspond to a determination module for determining the second-order derivative term Vd2 (sometimes referred to as second-order derivative term determination module 369). As described above, the second-order derivative term Vd2 is a term for making the angular acceleration magnitude Aafa, which is a magnitude of the angular acceleration Aaf of the direction D12 of the front wheel 12F, smaller. Then, in S280 of Fig. 12, the second summing point 390 uses the second-order derivative term Vd2 to determine the actuation control value Vc for controlling the steering motor 65 (in this embodiment, the terms Vp, Vi, Vd, Vd1 are used in addition to the second-order derivative term Vd2). When the front wheel 12F contacts with a portion of the road which has a sudden change in height (such as bump or pit), and the angular acceleration magnitude Aafa becomes larger, the second gain Kd2 becomes larger, and therefore the absolute value of the second-order derivative term Vd2 becomes larger. In particular, when the direction D12 of the front wheel 12F changes rapidly, the absolute value of the second-order derivative term Vd2 can increase before the absolute value of the first-order derivative term Vd1 increases. In this case, the steering motor 65 outputs a torque indicated by the second-order derivative term Vd2, i.e. a torque having a direction that makes the magnitude Aafa of the angular acceleration Aaf smaller. This suppresses a rapid, significant change in the direction D12 of the front wheel 12F, and therefore driving stability of the vehicle can be improved.

In addition, as described with reference to Fig. 1, the connection 50 is connected to the steering wheel 41a and to the front fork 17, and can transmit force from the steering wheel 41a to the front fork 17. This enables the user to modify the direction D12 of the front wheel 12F by handling the steering wheel 41a, and therefore driving stability in improved. Moreover, the connection 50 allows the direction D12 of the front wheel 12F to change following a change in lean of the vehicle body 90 independently of operation amount input to the steering wheel 41a (in this embodiment, the third portion 53 has smaller spring constant). Therefore, the driving stability is improved because the wheel angle AF can change to an angle appropriate for the lean angle T.

B. Modifications:

(1) The correspondence between the vehicle velocity V and the P gain Kp may be any of a variety of other correspondences instead of the correspondence shown in Fig. 13(A). For example, within the first range RV1, the P gain Kp may change in a curved manner as the vehicle velocity V changes. The P gain Kp may be equal to zero when the vehicle velocity V exceeds the reference velocity Vth. Alternatively, the P gain Kp may be larger than zero irrespective of the vehicle velocity V as in the graph of Fig. 13(A). In this case, the stability of the direction D12 of the front wheel 12F can be improved. In either case, the P gain Kp is preferably set to a smaller value when the vehicle velocity V is higher, as compared to when the vehicle velocity V is lower. This can result in improved driving stability of the vehicle at a variety of vehicle velocities V.

The correspondence between the D gain Kd and the vehicle velocity V may be any of a variety of other correspondences instead of the correspondence shown in Fig. 13(B). For example, the D gain Kd may be a constant value larger than zero, irrespective of the vehicle velocity V. In this case, the D gain Kd is preferably a small value close to zero. Alternatively, the D gain Kd may be equal to zero, irrespective of the vehicle velocity V. That is, the D control may be omitted form the control of the steering motor 65. In this case, the D gain control module 335 and the D control module 340 in Fig. 11 may be omitted, and S245, S250 in Fig. 12 may be omitted.

The I gain Ki may be set to a smaller value as the vehicle velocity V becomes higher, similarly to the P gain Kp and the D gain Kd shown in Fig. 13(A) and Fig. 13(B). Alternatively, the I gain Ki may be a constant value larger than zero, irrespective of the vehicle velocity V. In this case, the I gain Ki is preferably a small value close to zero. Alternatively, the I control may be omitted form the control of the steering motor 65. In this case, the I control module 330 in Fig. 11 may be omitted, and S240 in Fig. 12 may be omitted.

Alternatively, within the second range RV2 of the vehicle velocity V, each of the P gain Kp, the I gain Ki, and the D gain Kd may be set to zero. That is, within the first range RV1 of the vehicle velocity V, the torque of the steering motor 65 changes according to the wheel angle difference dAF, and within the second range RV2 of the vehicle velocity V, the torque may be set to zero.

In either case, when the vehicle velocity V exceeds the reference velocity Vth, the P gain Kp, the D gain Kd, and the I gain are preferably smaller values so that the magnitude of the torque of the steering motor 65 is made small as follows. Specifically, when the angle difference magnitude dAFa is within a partial range close to zero, and the magnitude Vafa of the change rate Vaf of the wheel angle AF is within a partial range close to zero, the torque magnitude TQa of the steering motor 65 is preferably smaller. Such a smaller torque magnitude TQa is a magnitude that allows the front wheel 12F to turn to right and left relative to the vehicle body 90 following a change in lean of the vehicle body 90 independently of the operation amount of the steering wheel 41a.

When the vehicle velocity V does not exceed the reference velocity Vth, the P gain Kp, the D gain Kd, and the I gain preferably achieve the following change in the torque magnitude TQa of the steering motor 65. That is, when the wheel angle difference dAF is a nonzero constant value, the higher the vehicle velocity V is, the smaller the torque magnitude TQa is. And, the torque magnitude TQa changes smoothly as the vehicle velocity V changes. In order to cause the steering motor 65 to output a torque that makes the wheel angle AF close to the first target wheel angle AFt1 while achieving the above-mentioned change in the torque magnitude TQa, the P gain Kp is preferably set to a smaller value when the vehicle velocity V is higher, as compared to when the vehicle velocity V is lower. And, the P gain Kp preferably changes smoothly as the vehicle velocity V changes. The D gain Kd and the I gain may be set to values that change according to the vehicle velocity V similarly to the P gain Kp (Fig. 13(A)), or instead may be set to sufficiently small values so that the derivative term Vd and the integral term Vi are smaller as compared to the proportional term Vp.

The correspondence between the first gain Kd1 and the magnitude Vafa of the angular velocity Vaf of the front wheel 12F may be any of a variety of other correspondences instead of the correspondence shown in Fig. 13(D). For example, the slope of the first gain Kd1 in the graph of Fig. 13(D) (in this case, the ratio of the variation of the first gain Kd1 to that of the angular velocity magnitude Vafa) may be increased with an increase in the angular velocity magnitude Vafa. Alternatively, within a partial range with largest magnitude in the entire range of the angular velocity magnitude Vafa, the first gain Kd1 may be maintained at a constant value. Alternatively, the first gain control module 344 and the first-order derivative control module 347 in Fig. 11 may be omitted, and S260, S265 in Fig. 12 may be omitted.

The correspondence between the second gain Kd2 and the magnitude Aafa of the angular acceleration Aaf of the front wheel 12F may be any of a variety of other correspondences instead of the correspondence shown in Fig. 14(A). For example, the slope of the second gain Kd2 in the graph of Fig. 14(A) (in this case, the ratio of the variation of the second gain Kd2 to that of the angular acceleration magnitude Aafa) may be increased with an increase in the angular acceleration magnitude Aafa. Alternatively, within a partial range with largest magnitude in the entire range of the angular acceleration magnitude Aafa, the second gain Kd2 may be maintained at a constant value. Alternatively, the second gain control module 360 and the second-order derivative control module 365 in Fig. 11 may be omitted, and S270, S275 in Fig. 12 may be omitted.

In this manner, the second summing point 390 may use one or more control values including the proportional term Vp to determine the actuation control value Vc. The control value(s) used to determine the actuation control value Vc may be only the proportional term Vp, or may include one or more terms optionally selected from the terms Vi, Vd, Vd1, Vd2 in addition to the proportional term Vp. In either case, the second summing point 390 may calculate a sum of one or more control values as the actuation control value Vc.

(2) The method of specifying the target wheel angle in S140, S180 of Fig. 10 may be any of a variety of methods. As described above, the correspondence between the steering wheel angle Ai and vehicle velocity V and the first target wheel angle AFt1 is the same as that between the first target lean angle T1, which is specified using the steering wheel angle Ai in S130 of Fig. 10, and vehicle velocity V and the wheel angle AF, which is determined using the above Equations 6, 7. Accordingly, the first target wheel angle AFt1 may be specified using a combination of first target lean angle T1 and vehicle velocity V. For example, the map data MAF may define the correspondence between the combination of first target lean angle T1 and vehicle velocity V and the first target wheel angle AFt1, and the main control unit 100 references the map data MAF to specify the first target wheel angle AFt1 corresponding to the combination of first target lean angle T1 and vehicle velocity V. The lean angle T is controlled to approach the first target lean angle T1. Therefore, the lean angle T may be used instead of the first target lean angle T1. For example, the map data MAF may define the correspondence between the combination of actual lean angle T and vehicle velocity V and the first target wheel angle AFt1, and the main control unit 100 references the map data MAF to specify the first target wheel angle AFt1 corresponding to the combination of lean angle T and vehicle velocity V. It should be noted that the first target lean angle T1 and the lean angle T are example lean parameters related to degree of lean of the vehicle body 90. Alternatively, the main control unit 100 uses both the steering wheel angle Ai and the lean parameter, and the vehicle velocity V to determine the target wheel angle. In this case, the main control unit 100 may determine the target wheel angle to be a wheel angle between a wheel angle appropriate for the steering wheel angle Ai and a wheel angle appropriate for the lean parameter.

Alternatively, the main control unit 100 references information (e.g. map data) indicative of a correspondence between a control parameter, including the steering wheel angle Ai, the lean angle T, the first target lean angle T1, and vehicle velocity V, and the target torque of the steering motor 65 to specify a target torque mapped to the control parameter. Then, the steering motor control unit 103 may supply the steering motor 65 with electric power corresponding to the target torque. The information indicative of the correspondence may be determined experimentally in advance.

In this manner, the main control unit 100 (and thus the turn control unit 170) may use the control parameter, which includes at least one of the lean parameter related to degree of lean of the vehicle body or the operation amount of the steering wheel 41a (such as the steering wheel angle Ai), and the vehicle velocity V, to control the torque of the steering motor 65.

(3) The method of controlling the lean motor 25 in S130, S170 of Fig. 10 may be any of a variety of methods. For example, the main control unit 100 references information (e.g. map data) indicative of a correspondence between a control parameter, including the steering wheel angle Ai and the lean angle T, and the target torque of the lean motor 25 to specify a target torque mapped to the control parameter. Then, the lean motor control unit 102 may supply the lean motor 25 with electric power corresponding to the target torque. The information indicative of the correspondence may be determined experimentally in advance.

In this manner, the main control unit 100 (and thus the lean control unit 190) may use the control parameter, which includes the lean angle T and the operation amount of the steering wheel 41a (such as the steering wheel angle Ai), to control the torque of the lean motor 25.

(4) As the process of controlling the vehicle 10, a variety of other processes may be employed instead of the processes described above with reference to Fig. 10, etc. For example, during lower velocity (for example, when the velocity V is equal to or lower than the reference velocity Vth), the lean angle T may be controlled so that it becomes a second target lean angle T2 having an absolute value smaller than that of the first target lean angle T1. The second target lean angle T2 may be expressed in Equation 8:

$$T2 = (V/Vth)T1 \qquad \text{(Equation 8)}$$

The second target lean angle T2 expressed in Equation 8 changes in proportion to the vehicle velocity V from 0 to the reference velocity Vth. The absolute value of the second target lean angle T2 is equal to or smaller than that of the first target lean angle T1. The reason is as follows. During lower velocity, the traveling direction is changed more frequently than during higher velocity. Therefore, during lower velocity, by making the absolute value of the lean angle T smaller, it is possible to drive more stably even if changing the traveling direction frequently. It should be noted that the relationship between the second target lean angle T2 and the vehicle velocity V may be any of a variety of other relationships such that the higher the vehicle velocity V is, the larger the absolute value of the second target lean angle T2 becomes.

During lower velocity (for example, when the vehicle velocity V is equal to or lower than the reference velocity Vth), the wheel angle AF may be controlled so that it becomes a second target wheel angle AFt2 having an absolute value larger than that of the first target wheel angle Aft1. For example, for the same steering wheel angle Ai, the second target wheel angle AFt2 may be determined so that the lower the vehicle velocity V is, the larger the absolute value of the second target wheel angle Aft2 is. This configuration allows the minimum turning radius of the vehicle 10 to be reduced when the velocity V is lower. In any event, for the same vehicle velocity V, the second target wheel angle AFt2 is preferably determined so that the larger the absolute value of the steering wheel angle is, the larger the absolute value of the second target wheel angle Aft2 is.

In any event, when the vehicle velocity V changes, the steering motor 65 and the lean motor 25 are preferably controlled so that the wheel angle AF and the lean angle T change smoothly.

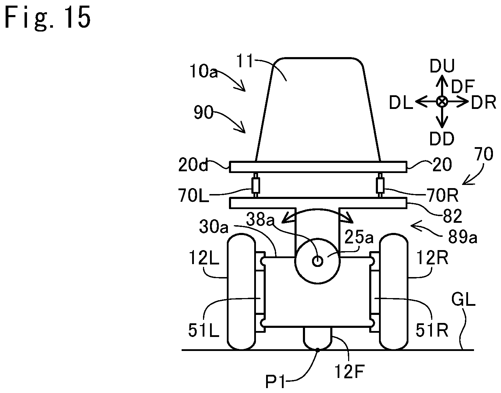

(5) As the configuration of lean mechanism which leans the vehicle body 90 in its width direction, a variety of other configurations may be employed instead of the configuration of the lean mechanism 89 including the link mechanism 30 (Fig. 4). Fig. 15 is a schematic diagram showing another embodiment of vehicle. The vehicle 10a of Fig. 15 is obtained by substituting the link mechanism 30 of the vehicle 10 illustrated in Fig. 4 etc. with a motor pedestal 30a. Each of the motors 51L, 51R of the rear wheel 12L, 12R is secured to the motor pedestal 30a. The motor pedestal 30a and the first support portion 82 are coupled rotatably with each other via a bearing 38a. The lean motor 25a can rotate the first support portion 82 to each of the right direction DR side and the left direction DL side relative to the motor pedestal 30a. This enables the vehicle body 90 to lean to each of the right direction DR side and the left direction DL side. The rear wheel 12L, 12R stand upright relative to the ground GL without being tilted, whether or not the vehicle body 90 leans. In this manner, as a lean mechanism 89a, a configuration may be employed that includes the pedestal 30a to which the motors 51L, 51R of the wheels 12L, 12R are secured, the member 82 which supports the vehicle body 90, the bearing 38a which rotatably couples the pedestal 30a to the member 82, and the lean motor 25a which tilts the member 82 relative to the pedestal 30a.

Each of the pair of wheels 12L, 12R (Fig. 5(B)) may be attached to the member 82 supporting the vehicle body 90 so that it can slide vertically, and the relative position of the pair of wheels 12L, 12R in a direction (i.e. the vertical direction of the vehicle body 90) perpendicular to the rotational axis may be changed by a first hydraulic cylinder coupling the member 82 to the wheel 12L and a second hydraulic cylinder coupling the member 82 to the wheel 12R. The lean mechanism may include a pair of arms spaced apart from each other in the width direction of the vehicle, and a pair of bearings coupling one end of each arm rotatably to the vehicle body. Each arm extends obliquely from one end toward the back direction DB side and the downward direction DD side to the other end. The rotational axes of the bearings are parallel to the right direction DR, and each arm can rotate upward and downward about its one end coupled to the bearing. The other ends of the pair of arms rotatably support a pair of wheels spaced apart from each other in the width direction, respectively. And, each arm independently rotates relative to the vehicle body to vary the distance between the wheel and the vehicle body. For example, as in the embodiment of Fig. 5(B), the vehicle body leans to right when the distance between the right wheel and the vehicle body decreases, and the distance between the left wheel and the vehicle body increases. It should be noted that the distance between the wheel and the vehicle body may be controlled by an actuator (e.g. motor, hydraulic cylinder and pump, etc.) coupled to the arm and to the vehicle body.

In general, it is possible to employ a variety of configurations which can tilt the vehicle body 90 relative to the ground GL. The lean mechanism may include a "first member which is connected directly or indirectly to at least one of the pair of wheels spaced apart from each other in the width direction of the vehicle," a "second member connected directly or indirectly to the vehicle body," and a "connection device movably connecting the first member to the second member," for example. The connection device may be a hydraulic cylinder that slidably connects the first member to the second member. Alternatively, the connection device may be a bearing that rotatably connects the first member to the second member. The direction of rotational axis of the bearing may be any direction that allows the distance between the wheel connected to the first member and the vehicle body to be varied. For example, the rotational axis may be parallel to the front direction DF as the rotational axes of the bearings 38, 39, 38a in Fig. 4, Fig. 15. It should be noted that the bearing may be a ball bearing, or may be a sliding bearing instead. In addition, the lean mechanism may include an actuator that applies to the first and second members a force that changes the position of the second member relative to the first member (e.g. a torque that changes the orientation of the second member relative to the first member).

In the embodiment of Fig. 4, the lateral link members 31D, 31U are connected via the link members 33L, 33R and the motors 51L, 51R indirectly to the wheels 12L, 12R, and are an example of the first member. The center longitudinal link member 21 is connected via the first support portion 82 and the suspension system 70 indirectly to the vehicle body 90, and is an example of the second member. And, the lean motor 25 is an example of the actuator. Alternatively, in the embodiment of Fig. 15, the motor pedestal 30a is connected via the motors 51L, 51R indirectly to the wheels 12L, 12R, and is an example of the first member. The first support portion 82 is connected via the suspension system 70 indirectly to the vehicle body 90, and is an example of the second member. The lean mechanism 89a of Fig. 15 includes the motor pedestal 30a, the first support portion 82, the bearing 38a which rotatably couples the motor pedestal 30a to the first support portion 82, and the lean motor 25a as an actuator.

In the embodiment of Fig. 4, the suspensions 70L, 70R may be substituted with simple spacers. In this case, the center longitudinal member 21 is connected via the first support portion 82 and the spacers indirectly to the vehicle body 90, and is an example of the second member of the lean mechanism. Alternatively, the first support portion 82 may be omitted, and the bearing 39 may couple the suspensions 70L, 70R to the upper lateral link member 31U. In this case, the suspensions 70L, 70R are connected directly to the vehicle body 90, and is an example of the second member of the lean mechanism. Alternatively, in the embodiment of Fig. 15, the motor pedestal 30a may be omitted, and the bearing 38a may couple the first support portion 82 to the motors 51L, 51R. In this case, the motors 51L, 51R are connected directly to the wheels 12L, 12R, and is an example of the first member of the lean mechanism.

In addition, the actuator of the lean mechanism may be another type of actuator instead of the electric motor. For example, the lean mechanism may be driven by fluid pressure (e.g. oil pressure) from a pump. In the embodiment of Fig.15, the lean motor 25a may be omitted, and the orientation of the member 82 relative to the pedestal 30a may be changed by a hydraulic cylinder coupling the pedestal 30a to the member 82.

(6) The lean control unit which controls the lean mechanism using an operation amount to be input into an operation input unit (e.g. steering wheel 41a) may be an electric circuit including a computer as with the main control unit 100 and the lean motor control unit 102 described above with reference to Fig. 9. Instead, an electric circuit including no computer (e.g. ASIC (Application Specific Integrated Circuit)) may control the lean mechanism in response to the operation amount to be input into the operation input unit so that the lean angle T becomes a target lean angle. In this manner, the lean control unit may include an electric circuit which controls the actuator of the lean mechanism.

(7) The operation input unit to be operated to input an operation amount indicating turning direction and degree of turn may be any of a variety of devices instead of a member rotatable to right and left, such as the steering wheel 41a (Fig. 1). For example, the operation input unit may be a lever that can be tilted to right and to left relative to a predetermined reference direction (e.g. upright direction). The tilt direction of the lever (either right or left) indicates the turning direction, and the tile angle relative to a reference direction indicates the degree of turn. The operation input unit may be any of a variety of devices that receive an operation amount through a mechanical movement (e.g. either rotation or tilt), such as the steering wheel 41a and the lever. Instead, the operation input unit may be a device that electrically receives an operation amount. For example, an operation amount may be input to a touch panel.

(8) The turn wheel support unit for supporting a turn wheel, which is a wheel turnable to right and left, may be configured in a variety of other ways instead of the configuration of the turn wheel support unit 180 of Fig. 1, Fig. 9. In general, the turn wheel support unit may include a supporting member that rotatably supports the one or more turn wheels, a turning device that supports the supporting member turnably to right and left relative to the vehicle body, a turning actuator that applies to the supporting member a torque for turning the supporting member to right and left, and a turn control unit that uses the operation amount and the vehicle velocity to control the torque of the turning actuator. If such a turn wheel support unit is employed, the supporting member also leans along with the vehicle body when the vehicle body leans. Accordingly, the direction of the turn wheel (i.e. the wheel angle) can change following a lean of the vehicle body. In addition, the turning actuator can control the direction of the supporting member that supports the one or more turn wheels (i.e. the direction of the one or more turn wheels) by applying a torque to the supporting member.

The supporting member may be a differently configured member (e.g. cantilevered member) instead of the front fork 17 (Fig. 1). The turning device may include a bearing that connects the supporting member to the vehicle body turnably to right and left relative to the front direction DF, such as the bearing 68 (Fig. 1). Such a bearing connects the vehicle body and the supporting member, and supports the supporting member turnably to right and left relative to the front direction DF of the vehicle. It should be noted that the bearing may be a ball bearing, or may be a sliding bearing instead. In any event, the turning device may be connected directly to the vehicle body, or may be connected indirectly to the vehicle body via another member. The turning device preferably connects the supporting member and the vehicle body so that the supporting member also leans along with the vehicle body when the vehicle body leans. Alternatively, the turning actuator may be another type of actuator instead of the electric motor such as the steering motor 65 (Fig. 1). For example, the turning actuator may include a pump, and fluid pressure (e.g. oil pressure) from the pump may apply a torque to the supporting member. The turn control unit may be an electric circuit including a computer, such as the turn control unit 170 (Fig. 9). Instead, an electric circuit including no computer (e.g. ASIC, analog electric circuit, etc.) may control the turning actuator. In this manner, the turn control unit may include an electric circuit which controls the turning actuator. The control value (e.g. actuation control value Vc, proportional term Vp, derivative term Vd, etc.) used to control the torque of the turning actuator (e.g. the steering motor 65) may be represented by digital information as with the actuation control value Vc in the above embodiment, or instead may be represented by a variety of analog information such as voltage value, current value, resistance value.

It should be noted that a single supporting member may rotatably support a plurality of turn wheels. Alternatively, the vehicle may include a plurality of supporting members if the vehicle includes a plurality of turn wheels. And, each of the plurality of supporting members may rotatably support one or more turn wheels. Each of one or more members of the plurality of supporting members may support a plurality of wheels. The total number of supporting member(s) provided for the vehicle may be equal to one, irrespective of the total number of turn wheels. For example, if the total number of turn wheels is equal to M (M is an integer equal to or larger than 2), a single supporting member may rotatably support each of the M turn wheels. Alternatively, the total number of supporting members may be the same as the total number of turn wheels. For example, M supporting members may rotatably support the M turn wheels, respectively. Each supporting member may be provided with one turning device.

In any event, the trail Lt described with reference to Fig. 1 preferably has a positive value. If the trail Lt has a positive value, the wheel angle of the turn wheel readily changes following a change in lean of the vehicle body 90. However, the trail Lt may be equal to zero. The caster angle CA may or may not be equal to zero (preferably, the caster angle CA is equal to or larger than zero).

(9) The connection that is connected to the operation input unit and to the supporting member may be configured in a variety of other ways instead of the configuration of the connection 50 of Fig. 1. The configuration of the connection may be any of a variety of configurations in which it is connected mechanically to the operation input unit and to the supporting member, transmits a torque from the operation input unit to the supporting member in response to a mechanical motion of the operation input unit due to handling of the operation input unit, and allows the direction of one or more turn wheels to change following a change in lean of the vehicle body independently of an operation amount input into the operation input unit.

For example, the first portion 51 of the connection 50 (Fig. 1) may be secured directly to the steering wheel 41a. That is, the connection 50 may be connected directly to the steering wheel 41a. The second portion 52 of the connection 50 may be connected via another member to the front fork 17. That is, the connection 50 may be connected via another member indirectly to the front fork 17. The third portion 53 of the connection 50 may be another type of member which can be elastically deformed. The third portion 53 may be made of a variety of elastic body, e.g. torsion spring, rubber, etc. Alternatively, the third portion 53 may be another type of device rather than an elastic body. For example, the third portion 53 may be a damper. Alternatively, the third portion 53 may be a device such as fluid clutch or fluid torque converter which transmits a torque via fluid. In this manner, the third portion 53 of the connection 50 may include at least one of elastic body, damper, fluid clutch, or fluid torque converter.

The third portion 53 may be any of a variety of devices which is connected to the first portion 51 and the second portion 52, transmits a torque from the first portion 51 to the second portion 52, and includes a movable part that allows for a change in relative position between the first portion 51 and the second portion 52. Such a third portion 53 allows the second portion 52 to move while the first portion 51 does not move, that is, allows the wheel angle AF to change while the steering wheel angle Ai does not change. As a result, the wheel angle AF of the front wheel 12F can change readily following a lean of the vehicle body 90. In any event, the connection 50 preferably achieves a connection loose enough to allow the wheel angle AF of the front wheel 12F to change following a change in lean of the vehicle body 90 independently of the steering wheel angle Ai input to the steering wheel 41a when the front wheel support device 41 operates in the second mode. However, such a connection 50 may be omitted.

(9) When the road is tilted, the lean angle T determined using the signal from the lean angle sensor 125 (in this case, the angle of the orientation of the center longitudinal member 21 relative to the upper lateral link member 31U) can be different from the lean angle of the vehicle upward direction DVU of the vehicle body 90 relative to the vertically upward direction DU. As such, instead of the lean angle T, a lean angle of upward direction (e.g. vehicle upward direction DVU) of the vehicle body 90 relative to the vertically upward direction DU (Fig. 5(B)), which is determined without depending upon the tilt of road, may be used (sometimes referred to as actual lean angle). For example, the vehicle 10, 10a may include a vertical direction detector for specifying the vertically upward direction DU. The main control unit 100 may use the vertically upward direction DU specified by the vertical direction detector to specify the actual lean angle. The vertical direction detector may be configured in a variety of ways. For example, the vertical direction detector includes an acceleration sensor, a gyroscope sensor, and a signal processing unit. The acceleration sensor is a sensor that detects acceleration in any direction, for example, triaxial accelerometer. The gyroscope sensor is a sensor that detects angular acceleration about a rotational axis in any direction, for example, triaxial angular accelerometer. The acceleration sensor and the gyroscope sensor may be secured to any of a variety of members of the vehicle 10, 10a. Hereinafter, the acceleration sensor and the gyroscope sensor are assumed to be secured to a common member (sometimes referred to as sensor securing member) of multiple members of the vehicle 10, 10a.

The acceleration sensor detects a direction of acceleration. Hereinafter, a direction of acceleration detected by the acceleration sensor will be referred to as detected direction. With the vehicle 10, 10a stopped, the detected direction is the same as the vertically downward direction DD opposite to the vertically upward direction DU. That is, a direction opposite to the detected direction is the vertically upward direction DU.

When the vehicle 10, 10a is moving, the detected direction can be displaced from the vertically downward direction DD in response to the movement of the vehicle 10, 10a. For example, the detected direction is displaced so that it is tilted toward the back direction DB side from the vertically downward direction DD if the vehicle 10, 10a accelerates during its forward movement. The detected direction is displaced so that it is tilted toward the front direction DF side from the vertically downward direction DD if the vehicle 10, 10a decelerates during its forward movement. The detected direction is deviated so that it is tilted toward the right direction DR side from the vertically downward direction DD if the vehicle 10, 10a turns to left during its forward movement. The detected direction is deviated so that it is tilted toward the left direction DL side from the vertically downward direction DD if the vehicle 10, 10a turns to right during its forward movement.

The signal processing unit of the vertical direction detector uses the vehicle velocity V detected by the vehicle velocity sensor 122 to calculate the acceleration of the vehicle 10, 10a. Then, the signal processing unit uses the acceleration to determine the deviation of the detected direction from the vertically downward direction DD due to the acceleration of the vehicle 10, 10a (e.g. the deviation of the detected direction toward the front direction DF or back direction DB is determined). In addition, the signal processing unit uses the angular acceleration detected by the gyroscope sensor to determine the deviation of the detected direction from the vertically downward direction DD due to the angular acceleration of the vehicle 10, 10a (e.g. the deviation of the detected direction toward the right direction DR or left direction DL is determined). As described above, the signal processing unit determines the deviation of the detected direction from the vertically downward direction DD. The signal processing unit uses the determined deviation to modify the detected direction, and thereby determines the vertically downward direction DD and thus the vertically upward direction DU. Then, the signal processing unit outputs information indicating the determined vertically upward direction DU.

The determined vertically upward direction DU represents a vertically upward direction DU relative to the sensor securing member. The main control unit 100 uses the vertically upward direction DU determined by the vertical direction detector, and a positional relationship between the sensor securing member and the vehicle body 90 to calculate an angle (i.e. actual lean angle) between the vertically upward direction DU and the vehicle upward direction DVU of the vehicle body 90. The main control unit 100 (and thus the lean control unit 190) uses the calculated actual lean angle to control the lean motor 25. For example, the lean control unit 190 calculates a target actual lean angle instead of the target lean angle, and then controls the lean motor 25 so that the actual lean angle approaches the target actual lean angle. This configuration allows the lean control unit 190 to appropriately control the actual lean angle even if the road is tilted to right or left. Also, the main control unit 100 (and thus the turn control unit 170) uses the calculated actual lean angle to control the steering motor 65. This allows the wheel angle AF to be controlled appropriately.

The signal processing unit of the vertical direction detector may use other information related to the movement of the vehicle 10, 10a in addition to the information from the gyroscope sensor and the acceleration sensor to detect the vertically upward direction DU. As the other information, for example, the location of the vehicle 10, 10a determined by using GPS (Global Positioning System) may be used. The signal processing unit may correct the vertically upward direction DU by using a location determined by GPS, for example. It should be noted that an amount of correction based on a location determined by GPS may be determined experimentally in advance.

The signal processing unit of the vertical direction detector may be a variety of electric circuits, for example, an electric circuit with a computer or an electric circuit (e.g. ASIC) without a computer. The gyroscope sensor may be a sensor that detects an angular velocity instead of angular acceleration.

(10) The vehicle may be configured in a variety of other ways instead of the above-described configurations. For example, the trail Lt (Fig. 1) may be equal to zero, or may be smaller than zero. In this case again, as described above with reference to Fig. 8, with the angular momentum of the rotating front wheel 12F, the direction of the front wheel 12F (i.e. wheel angle AF) can change following a lean of the vehicle body 90. In the embodiment of Fig. 4, Fig. 15, the motors 51L, 51R may be connected via suspensions to the device 30, 30a. At least some of the function for controlling the lean motor 25 among the functions of the main control unit 100 (Fig.9) may be achieved by the lean motor control unit 102. At least some of the function for controlling the steering motor 65 among the functions of the main control unit 100 may be achieved by the steering motor control unit 103. The controller 110 may be configured by a single control unit. The computer such as the controller 110 (Fig. 9) may be omitted. For example, an electric circuit including no computer (e.g. ASIC) may control the motors 51R, 51L, 25, 65 in response to signals from the sensors 122, 123, 124, 125, 145, 146, and the switch 47. Alternatively, a machine which operates using a drive force of hydraulic pressure or motor may control the motors 51R, 51L, 25, 65 instead of the electric circuit. The method of specifying a correspondence between an input value and an output value (e.g. the correspondence between the vehicle velocity V and the P gain Kp) may be any of a variety of methods, such as a method of using a function that uses an input value as an argument to calculate an output value, instead of the method of using map data (e.g. map data MT, MAF, Mp, Md, Md1, Md2). The correspondence used to control the vehicle (e.g. the correspondence represented by the map data MT, MAF, Mp, Md, Md1, Md2) may be determined experimentally to allow the vehicle 10, 10a to drive properly. The controller of the vehicle may dynamically change the correspondence used to control the vehicle, according to the condition of the vehicle. For example, the vehicle may include a weight sensor for measuring the weight of the vehicle body, and the controller may adjust the correspondence according to the weight of the vehicle body.

In addition, a variety of configurations may be employed as the total number and arrangement of the plurality of wheels. For example, there may be two front wheels in total and one rear wheel in total. Alternatively, there may be two front wheels in total and two rear wheels in total. A pair of wheels spaced apart from each other in the width direction may be front wheels, and may also be turn wheels. The rear wheels may be turn wheels. The drive wheel may be the front wheel. In any event, the vehicle preferably includes N (N is an integer equal to or larger than 3) wheels, including a pair of wheels spaced apart from each other in the width direction of the vehicle, and at least one other wheel. And, the N wheels of the vehicle preferably include one or more front wheels, and one or more rear wheels disposed in the back direction DB side of the front wheel(s). This configuration enables the vehicle to self-stand when it is stopped. In this case, at least one of the pair of wheels or the other wheel(s) are preferably configured as one or more turn wheels turnable to right and left relative to the forward movement direction of the vehicle. That is, only the pair of wheels may be turn wheels, only the other wheel(s) may be turn wheel(s), or the three or more wheels including the pair of wheels and the other wheel(s) may be tun wheels. In this case, the total number of the other wheel(s) included in the one or more turn wheels may be any number. The drive device for driving the drive wheel may be any device which rotates the wheel (e.g. internal combustion engine) instead of the electric motor. Alternatively, the drive device may be omitted. That is, the vehicle may be a human-powered vehicle. In this case, the lean mechanism may be a human-powered lean mechanism which operates in response to handling of the operation input unit. In addition, the maximum riding capacity of the vehicle may be two or more persons instead of one person.

(11) In each embodiment described above, some of the components which are achieved by hardware may be substituted with software while some or all of the components which are achieved by software may be substituted with hardware. For example, the function of the controller 110 in Fig. 9 may be achieved by a dedicated hardware circuitry.

In addition, if some or all of the functions of the present invention are achieved by a computer program, the program can be provided in the form of a computer-readable storage medium (e.g. non-transitory storage medium) having the program stored therein. The program can be used while being stored in a storage medium (computer-readable storage medium) which is the same as or different from the provided storage medium. The "computer-readable storage medium" is not limited to a portable storage medium such as memory card or CD-ROM, but may also include an internal storage within the computer such as various types of ROM, and an external storage connected to the computer such as hard disk drive.

The present invention has been described above with reference to the embodiments and the modifications although the above-described embodiments are intended to facilitate the understanding of the invention, but not to limit the invention. The present invention may be modified or improved without departing from the spirit and scope of the claims, and includes its equivalents.

Industrial Applicability

The present invention can be preferably used for a vehicle.

Description of the References

| | |
|---|---|
| 10, 10a | vehicle |
| 11 | seat |
| 12F | front wheel |
| 12L | left rear wheel (drive wheel) |
| 12R | right rear wheel (drive wheel) |
| 12Fc | gravity center |
| 12La, 12Ra | wheel |
| 12Lb, 12Rb | tire |
| 17 | front fork |
| 20 | main body |
| 20a | front portion |

| | |
|---|---|
| 20b | bottom portion |
| 20c | rear portion |
| 20d | support portion |
| 21 | center longitudinal link member |
| 25, 25a | lean motor |
| 30 | link mechanism |
| 30a | motor pedestal |
| 31D | lower lateral link member |
| 31U | upper lateral link member |
| 33L | left longitudinal link member |
| 33R | right longitudinal link member |
| 38, 38a, 39 | bearing |
| 41 | front wheel support device |
| 41a | steering wheel |
| 41ax | supporting rod |
| 45 | accelerator pedal |
| 46 | brake pedal |
| 47 | shift switch |
| 50 | connection |
| 51 | first portion |
| 52 | second portion |
| 53 | third portion |
| 51L | left electric motor |
| 51R | right electric motor |
| 65 | steering motor |
| 66 | rotor |
| 67 | stator |
| 68 | bearing |
| 70 | suspension system |
| 70L | left suspension |
| 70R | right suspension |
| 70La, 70Ra | central axis |
| 71L, 71R | coil spring |
| 72L, 72R | shock absorber |
| 75 | connector |
| 80 | rear wheel support |
| 82 | first support portion |
| 83 | second support portion |
| 89, 89a | lean mechanism |
| 90 | vehicle body |
| 90c | gravity center |
| 110 | controller |
| 100 | main control unit |
| 101 | drive device control unit |
| 102 | lean motor control unit |
| 103 | steering motor control unit |
| 100p, 101p, 102p, 103p | processor |
| 100v, 101v, 102v, 103v | volatile memory |
| 100n, 101n, 102n, 103n | non-volatile memory |
| 101c, 102c, 103c | electric circuit (electric power control module) |
| 120 | battery |
| 122 | vehicle velocity sensor |
| 123 | steering wheel angle sensor |
| 124 | wheel angle sensor |
| 125 | lean angle sensor |
| 145 | accelerator pedal sensor |
| 146 | brake pedal sensor |
| 170 | turn control unit |

| | |
|---|---|
| 180 | turn wheel support unit |
| 190 | lean control unit |
| 310 | first summing point |
| 315 | P gain control module |
| 320 | P control module |
| 330 | I control module |
| 335 | D gain control module |
| 340 | D control module |
| 344 | first gain control module |
| 347 | first-order derivative control module |
| 360 | second gain control module |
| 365 | second-order derivative control module |
| 390 | second summing point |
| T | lean angle |
| V | velocity |
| R | turning radius |
| m | mass |
| V | vehicle velocity |
| AFt1 | first target wheel angle |
| AFt2 | second target wheel angle |
| T2 | second target lean angle |
| RVa1 | first range |
| RVa2 | second range |
| Vaft | reference change rate |
| TQa1 | first value |
| TQa2 | second value |
| F1 | first force |
| F2 | second force |
| F1b | force |
| F2b | force |
| T1 | first target lean angle |
| P1 | contact center |
| P2 | intersection point |
| CA | caster angle |
| DU | upward direction |
| DD | downward direction |
| DF | front direction |
| DB | back direction |
| DL | left direction |
| DR | right direction |
| DU | vertically upward direction |
| DVU | vehicle upward direction |
| D12 | moving direction |
| AF | wheel angle |
| RF | turning direction |
| GL | ground |
| MT | map data |
| MAF | map data |
| Md, Md1, Md2 | map data |
| Mp | map data |
| Vp | proportional term |
| Vi | integral term |
| Vd | derivative term |
| Vc | control value |
| Cf | front center |
| Cb | rear center |
| Lh | wheel base |
| Ai | steering wheel angle |

| Cr | turning center |
|---|---|
| Lt | trail |
| Vx | first vehicle velocity |
| dAF | wheel angle difference |
| RV1 | fist range |
| RV2 | second range |
| Ca1 | contact area |
| Tq1 | torque |
| Ax1, Ax2 | turning axis, rotational axis |
| Ax3 | front axis |
| CaL | contact area |
| PbL | contact center |
| CaR | contact area |
| PbR | contact center |
| ArL, ArR | rotational axis |
| AxL | lean axis |
| Vaf | change rate (angular velocity) |
| AxR | roll axis |
| Vth | reference velocity |

**Claims**

1. A vehicle comprising:

N (N is an integer equal to or larger than 3) wheels, including a pair of wheels spaced apart from each other in a width direction of the vehicle and one or more other wheels, at least one of another wheel or the pair of wheels being configured as one or more turn wheels turnable to right and left relative to a forward movement direction of the vehicle, and the N wheels including one or more front wheels and one or more rear wheels;
a vehicle body;
a lean mechanism for leaning the vehicle body in the width direction;
an operation input unit to be operated to input an operation amount indicating turning direction and degree of turn;
a lean control unit for controlling the lean mechanism using the operation amount input into the operation input unit; and
a turn wheel support unit supporting the one or more turn wheels,
wherein the turn wheel support unit comprises:

a supporting member rotatably supporting the one or more turn wheels;
a turning device supporting the supporting member turnably to right and left relative to the vehicle body;
a turning actuator for applying to the supporting member a torque for turning the supporting member to right and left; and
a turn control unit for controlling a torque of the turning actuator using a control parameter, the control parameter including at least one of a lean parameter related to degree of lean of the vehicle body or the operation amount, and the vehicle velocity,

wherein the turn control unit comprises:

an specifying module for specifying a target direction of the one or more turn wheels using the control parameter;
a first determination module for determining a first control value for causing a direction of the one or more turn wheels to approach the target direction;
an actuation control value determination module for determining an actuation control value for controlling the turning actuator using the first control value; and
a torque control module for controlling a torque of the turning actuator according to the actuation control value, and

wherein the first determination module uses the vehicle velocity to adjust the first control value.

2. The vehicle of claim 1,
   wherein the first determination module determines the first control value so that a ratio of a magnitude of a torque of the turning actuator indicated by the first control value to a magnitude of difference between the direction of the one or more turn wheels and the target direction is smaller when the vehicle velocity is higher, as compared to when the vehicle velocity is lower.

3. The vehicle of claim 1 or 2,
   wherein the first determination module uses a difference between the direction of the one or more turn wheels and the target direction to calculate the first control value through a feedback control.

4. The vehicle of claim 3,
   wherein the first determination module determines the first control value so that a magnitude of a torque of the turning actuator indicated by the first control value is larger when the difference between the direction of the one or more turn wheels and the target direction is larger, as compared to when the difference is smaller.

5. The vehicle of any one of claims 1 to 4,
   wherein the turn control unit comprises a second determination module for determining a second control value for making smaller a magnitude of an angular velocity which is a rate of change of the direction of the one or more turn wheels, and
   wherein the actuation control value determination module uses at least the first control value and the second control value to determine the actuation control value.

6. The vehicle of any one of claims 1 to 5,
   wherein the turn control unit comprises a third determination module for determining a third control value for making smaller a magnitude of an angular acceleration which is an acceleration of change of the direction of the one or more turn wheels, and
   wherein the actuation control value determination module uses at least the first control value and the third control value to determine the actuation control value.

7. The vehicle of any one of claims 1 to 6,
   wherein the turn wheel support unit comprises a connection which is connected to the operation input unit and to the supporting member, the connection allowing the direction of the one or more turn wheels to change following a change in lean of the vehicle body independently of the operation amount input into the operation input unit.

Fig. 1

Fig. 2

Fig. 3

Fig. 4

Fig. 5

(A)

(B)

# Fig. 6

Fig. 7

Fig. 8

# Fig. 9

| | | | |
|---|---|---|---|
| **VEHICLE VELOCITY SENSOR** 122 | **MAIN CONTROL UNIT** 100 | **DRIVE DEVICE CONTROL UNIT** 101<br>101p<br>101v<br>101n<br>101c | **RIGHT ELECTRIC MOTOR** 51R |
| **STEERING WHEEL ANGLE SENSOR** 123 | | | **LEFT ELECTRIC MOTOR** 51L |
| **WHEEL ANGLE SENSOR** 124 | | | |
| **LEAN ANGLE SENSOR** 125 | | **LEAN MOTOR CONTROL UNIT** 102<br>102p<br>102v<br>102n<br>102c | **LEAN MOTOR** 25 |
| **ACCELERATOR PEDAL SENSOR** 145 | | | |
| **BRAKE PEDAL SENSOR** 146 | 100p<br>100v<br>100n<br>MT<br>MAF | **STEERING MOTOR CONTROL UNIT** 103<br>103p<br>103v<br>103n<br>Mp Md<br>Md1<br>Md2<br>103c | **STEERING MOTOR** 65 |
| **SHIFT SWITCH** 47 | | | |

110

190

180

170

F i g. 10

```
                    ┌──────────────────┐
                    │ Control Process  │
                    └──────────────────┘
                             │
                             ▼            ⌐S100
        ┌────────────────────────────────────┐
        │        Acquiring Signals           │
        │      from Sensors and Switch       │
        └────────────────────────────────────┘
                             │
                             ▼            ⌐S110
                        ◇────────────◇
                       Reverse or Parking?          No
                        ◇────────────◇ ──────────────────────┐
                             │                                │
                            Yes                               │
                             ▼            ⌐S170               ▼            ⌐S130
        ┌────────────────────────────┐    ┌────────────────────────────┐
        │      First Lean Control     │    │     Second Lean Control     │
        └────────────────────────────┘    └────────────────────────────┘
                             │            ⌐S180              │            ⌐S140
                             ▼                               ▼
        ┌────────────────────────────┐    ┌────────────────────────────┐
        │    First Steering Control   │    │   Second Steering Control   │
        └────────────────────────────┘    └────────────────────────────┘
                             │                               │
                             ▼◄──────────────────────────────┘
                    ┌──────────────────┐
                    │       End        │
                    └──────────────────┘
```

Fig. 11

Fig. 12

EP 3 705 388 A1

```
              ╭─────────────────────────────────────╮
              │   Control of Direction of Front Wheel │
              ╰─────────────────────────────────────╯
                               │
                               ▼            ┌S200
              ┌──────────────────────────────────┐
              │      Acquiring Information         │
              └──────────────────────────────────┘
                               │
                               ▼       ┌S210                    ┌S220
              ┌────────────────────────────┐    ┌──────────────────────────┐
              │ Determining Target Wheel Angle │──▶│ Calculating Difference dAF │
              └────────────────────────────┘    └──────────────────────────┘
```

|  | ┌S270 | ┌S260 | ┌S230 |  | ┌S245 |
|---|---|---|---|---|---|
| | Determining Second Gain Kd2 Using Angular Acceleration Aaf of Wheel Angle AF | Determining First Gain Kd1 Using ChangeRate Vaf of Wheel Angle AF | Determining P Gain Kp Using Vehicle Velocity V | | Determining D Gain Kd Using Vehicle Velocity V |
| | ┌S275 | ┌S265 | ┌S235 | ┌S240 | ┌S250 |
| | Determining Second-order Derivative Term Vd2 | Determining First-order Derivative Term Vd1 | Determining Proportional Term Vp | Determining Integral Term Vi | Determining Derivative Term Vd |

```
                               ▼           ┌S280
              ┌──────────────────────────────────┐
              │   Determining and Outputting      │
              │         Control Value Vc          │
              └──────────────────────────────────┘
                               │           ┌S290
                               ▼
              ┌──────────────────────────────────┐
              │      Controlling Electric Power    │
              └──────────────────────────────────┘
                               │
                               ▼
                         ╭───────────╮
                         │   Return   │
                         ╰───────────╯
```

Fig. 13

Fig. 14

(A)

(B)

Fig. 15

EP 3 705 388 A1

## INTERNATIONAL SEARCH REPORT

| International application No. |
| --- |
| PCT/JP2018/040293 |

A.  CLASSIFICATION OF SUBJECT MATTER
Int.Cl.    B62K5/10(2013.01)i,   B60G21/05(2006.01)i,   B60L15/20(2006.01)i,
B62D6/00(2006.01)i,   B62D9/02(2006.01)i,   B62D61/08(2006.01)i,
B62K5/027(2013.01)i
According to International Patent Classification (IPC) or to both national classification and IPC

B.  FIELDS SEARCHED

Minimum documentation searched (classification system followed by classification symbols)
Int.Cl.    B62K5/10, B60G21/05, B60L15/20, B62D6/00, B62D9/02, B62D61/08,
B62K5/027

Documentation searched other than minimum documentation to the extent that such documents are included in the fields searched
Published examined utility model applications of Japan          1922–1996
Published unexamined utility model applications of Japan        1971–2018
Registered utility model specifications of Japan                1996–2018
Published registered utility model applications of Japan        1994–2018

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| Y<br>A | JP 2013-71688 A (EQUOS RESEARCH CO., LTD.) 22 April 2013, paragraphs [0014]-[0134], fig. 1-14 (Family: none) | 1, 3-4<br>2, 5-7 |
| Y<br>A | JP 2003-118617 A (KOYO SEIKO CO., LTD.) 23 April 2003, paragraphs [0011]-[0032], fig. 1-9 (Family: none) | 1, 3-4<br>2, 5-7 |
| Y<br>A | JP 2000-351382 A (TOYOTA MOTOR CORP.) 19 December 2000, paragraphs [0017]-[0057], fig. 1-7 (Family: none) | 1, 3-4<br>2, 5-7 |
| A | WO 2017/086403 A1 (YAMAHA MOTOR CO., LTD.) 26 May 2017, paragraphs [0040]-[0147], fig. 1-10 & US 2018/0265156 A1 & US 2018/0265117 A1 & EP 3363723 A1 & EP 3378747 A1 & CA 3006013 A1 & CA 3005812 A1 | 1-7 |

☐  Further documents are listed in the continuation of Box C.          ☐  See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>26 December 2018 (26.12.2018) | Date of mailing of the international search report<br>15 January 2019 (15.01.2019) |
| --- | --- |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**REFERENCES CITED IN THE DESCRIPTION**

**Patent documents cited in the description**

- WO 2011083335 A